(19)

Europäisches
Patentamt
European
Patent Office
Office européen
des brevets

(11) **EP 4 290 419 A1**

(12) **EUROPEAN PATENT APPLICATION**
published in accordance with Art. 153(4) EPC

(43) Date of publication:
**13.12.2023 Bulletin 2023/50**

(21) Application number: **22749130.5**

(22) Date of filing: **28.01.2022**

(51) International Patent Classification (IPC):
*G06N 10/00* *(2022.01)*      *G06F 9/48* *(2006.01)*
*G06F 9/50* *(2006.01)*      *G06F 8/41* *(2018.01)*
*G06F 16/907* *(2019.01)*     *G06F 8/40* *(2018.01)*

(52) Cooperative Patent Classification (CPC):
**G06F 8/40; G06F 8/41; G06F 9/48; G06F 9/50;
G06F 16/907; G06N 10/00**

(86) International application number:
**PCT/CN2022/074798**

(87) International publication number:
**WO 2022/166851 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.02.2021   CN 202110174503
07.02.2021   CN 202110179682
07.02.2021   CN 202110169289
08.02.2021   CN 202110172741
09.04.2021   CN 202110383305**

(71) Applicant: **Origin Quantum Computing
Technology
(Hefei) Co., Ltd
Hefei, Anhui 230088 (CN)**

(72) Inventor: **DOU, Menghan
Hefei, Anhui 230088 (CN)**

(74) Representative: **Rau, Schneck & Hübner
Patentanwälte Rechtsanwälte PartGmbB
Königstraße 2
90402 Nürnberg (DE)**

(54) **QUANTUM COMPUTER OPERATING SYSTEM, QUANTUM COMPUTER, AND READABLE
STORAGE MEDIUM**

(57)     Disclosed are a quantum computer operating system, a quantum computer and a quantum computer readable storage medium. The quantum computer operating system comprises: a quantum program compiling-optimizing service module configured for implementing following processes: obtaining a quantum program to be executed, obtaining a topology of a qubit in a quantum chip of a second quantum computing hardware device, compiling the quantum program into quantum computing tasks based on the topology; and a communication module configured for sending the quantum computing tasks to the second quantum computing hardware device for quantum computing.

FIG.2

**Description**

The disclosure claims priority to a Chinese patent application No. 202110174503.0 filed on February 7, 2021 and entitled "QUANTUM COMPUTER OPERATING SYSTEM, QUANTUM COMPUTER AND READABLE STORAGE MEDIUM", which is hereby incorporated by reference in its entirety. The disclosure also claims priority to a Chinese patent application No. 202110179682.7 filed on February 7, 2021 and entitled "QUANTUM COMPUTER OPERATING SYSTEM AND QUANTUM COMPUTER", which is hereby incorporated by reference in its entirety. The disclosure also claims priority to a Chinese patent application No. 202110169289.X filed on February 7, 2021 and entitled "QUANTUM COMPUTING TASK SCHEDULING METHOD, DEVICE AND QUANTUM COMPUTER OPERATING SYSTEM", which is hereby incorporated by reference in its entirety. The disclosure also claims priority to a Chinese patent application No. 202110172741.8 filed on February 8, 2021 and entitled "QUANTUM COMPUTING TASK SCHEDULING METHOD, DEVICE AND QUANTUM COMPUTER OPERATING SYSTEM", which is hereby incorporated by reference in its entirety. The disclosure also claims priority to a Chinese patent application No. 202110383305.5 filed on April 9, 2021 and entitled "QUANTUM COMPUTING TASK COMPUTING METHOD, DEVICE AND QUANTUM COMPUTER OPERATING SYSTEM", which is hereby incorporated by reference in its entirety.

**TECHNICAL FIELD**

The present disclosure relates to the field of quantum computation, in particular to a quantum computer operating system, a quantum computer and a quantum computer readable storage medium. Besides, the present disclosure also relates to quantum computing tasks scheduling method, device, and quantum computer operating system. Further, the present disclosure also relates to quantum computing tasks computing method, device, and quantum computer operating system.

**BACKGROUND**

A quantum computer is a type of physical device that follows the laws of quantum mechanics to perform high-speed mathematical and logical operations, store and process quantum information. When a device processes and computes quantum information and runs quantum algorithms, it is a quantum computer. The quantum computer has become a key technology under research because it has the ability to deal with mathematical problems more efficiently than an ordinary computer, for example, it can speed up the time cost for cracking the RSA key from hundreds of years to a few hours.

The importance of an operating system to a computer is self-evident, this is true for classical computers, and even more so for quantum computer technology that is still in its early stages of development. A quantum computer operating system determines the computing efficiency and stability of the quantum computer, and then determines the practicality of the quantum computer. At present, the quantum computer operating system is still in the research stage, and a widely accepted quantum computer operating system has not yet been proposed by the industry.

Therefore, there is a need to provide a new quantum computer operating system.

In addition, when scheduling a task by current quantum computing, it is only necessary to consider the waiting time of quantum computing tasks and fully available complete quantum chips, and to schedule the task to an unoccupied quantum chip in the form of submitting first and running first. The scheduling method greatly wastes computing resources of the quantum chip and negatively influences the computing efficiency.

In addition, when performing computing by the current quantum computing tasks, it is only necessary to consider the waiting time of the quantum computing tasks submitted by a user and the releasing time of completely idle quantum chips, and to schedule the quantum computing tasks in a task queue to the quantum chips one by one in the form of submitting first and running first so as to perform quantum computing. The method is low in computing efficiency, which not only wastes the computing resources of the quantum chip, but also negatively influences the quantum computing efficiency.

**SUMMARY**

The objective of the present disclosure is to provide a quantum computer operating system and a quantum computer. The embodiments herein can generate quantum computing task based on the topological structure of the quantum computing chip, thereby improving the versatility of the quantum computer operating system.

A first embodiment of the present disclosure provides a quantum computer operating system, which comprises: a quantum program compiling-optimizing service module configured for implementing following processes: obtaining a quantum program to be executed, obtaining a topology of a qubit in a quantum chip of a second quantum computing hardware device, compiling the quantum program into quantum computing tasks based on the topology; and a communication module configured for sending the quantum computing tasks to the second quantum computing hardware device for quantum computing.

Preferably, the above quantum computer operating system further comprises: a qubit managing service module configured for implementing following processes: receiving the quantum computing tasks from the quantum program compiling-optimizing service module, obtaining a current topology of an available qubit in the quantum chip of the second quantum computing hardware device, and selecting a quantum computing task to be processed from the quantum computing tasks based on the current topology, wherein qubits required by the quantum computing task to be processed match the current topology; wherein the communication module sends the quantum computing task to be processed to the second quantum computing hardware device.

In the above quantum computer operating system, wherein, preferably, the number of the qubits required by the quantum computing task to be processed is less than or equal to the number of qubits in the current topology.

In the above quantum computer operating system, wherein, preferably, the topology is a current topology of an available qubit in the quantum chip of the second quantum computing hardware device, and the quantum program compiling-optimizing service module compiles the quantum program into the quantum computing tasks based on the current topology.

Preferably, the above quantum computer operating system further comprises: a qubit managing service module configured for obtaining a current topology of an available qubit in the quantum chip of the second quantum computing hardware device, and transmitting the current topology to the quantum program compiling-optimizing service module.

In the above quantum computer operating system, wherein, preferably, the quantum program is a program code in an intermediate language.

In the above quantum computer operating system, wherein, preferably, the quantum computing tasks comprise quantum circuits.

In the above quantum computer operating system, wherein, preferably, further comprising: an automatic calibration service module configured for automatically testing and calibrating the quantum chip.

In the above quantum computer operating system, wherein, preferably, further comprising: a quantum computing task scheduling-managing service module configured for determining a quantum computing task to be assigned according to priorities of the quantum computing tasks, wherein the priorities are determined based on waiting time and executing time of the quantum computing tasks.

A quantum computer is provided by a second embodiment of the present disclosure, comprising: a first quantum computing hardware device, wherein the quantum computer operating system described in the first embodiment of the present disclosure is provided on the first quantum computing hardware device; and a second quantum computing hardware device being in communication with the first quantum computing hardware device and comprising a quantum chip, wherein, the communication module of the quantum computer operating system sends the quantum computing tasks to the second quantum computing hardware device for executing quantum computing.

Compared with the prior art, the quantum computer operating system of the present disclosure comprises: a quantum program compiling-optimizing service module configured for implementing following processes: obtaining a quantum program to be executed, obtaining a topology of a qubit in a quantum chip of a second quantum computing hardware device, compiling the quantum program into quantum computing tasks based on the topology; and a communication module configured for sending the quantum computing tasks to the second quantum computing hardware device for quantum computing. When scheduling quantum computing tasks, the quantum computer operating system of the present disclosure compiles the quantum computing program into a quantum computing task that matches the topology of the quantum chip by combining the topology of the qubits in the quantum chip of the second quantum computing hardware device, and then sends the quantum computing task matching the quantum computing chip to the quantum computing chip for computing, therefore improving the versatility of the quantum computer operating system.

The objective of the present disclosure is also to provide a quantum computer operating system and a quantum computer for solving shortcomings in the prior art, which can implement scheduling of the quantum computing tasks, improve the computing efficiency and stability of the quantum computer, and then improve the practicality of the quantum computer.

One aspect of the present disclosure provides a quantum computer operating system, comprising:

a qubit managing service module configured for obtaining a current topology of an available qubit in a quantum chip;
a quantum computing task scheduling-managing service module configured for determining a quantum computing task to be processed from currently unprocessed quantum computing tasks, wherein the number of the qubits required by the quantum computing task to be processed is less than or equal to the number of qubits in the current topology;
a compilation-optimizing service module configured for compiling the quantum computing task to be processed so as to obtain an executable quantum circuit that can be executed on the quantum chip;
a quantum computing task scheduling-managing service module configured for further determining a quantum computing task to be assigned according to priority of the executable quantum circuit, wherein: the priority of the executable quantum circuit is determined according to the executing time of the quantum chip executing the executable quantum circuit and the waiting time of the corresponding quantum computing task;

a communication module configured for being in communication with a quantum computing hardware device used for implementing implements assignment, execution as well as feedback on an execution result, of the quantum computing task to be assigned.

In the above quantum computer operating system, wherein, preferably, the available qubit comprises an unused and calibrated qubit.

In the above quantum computer operating system, wherein, preferably, the quantum computer hardware comprises a quantum measuring and controlling system for providing a signal to the quantum chip and receiving an output signal of the quantum chip;

the communication module is configured for sending a first instructional datand receiving a first result data from the quantum measuring and controlling system, wherein the first instructional data is used for controlling the quantum measuring and controlling system to output a signal acceptable to the quantum chip corresponding to the quantum computing task to be assigned.

In the above quantum computer operating system, wherein, preferably, the quantum computer hardware further comprises a dilution refrigerator for providing operating temperature of the quantum chip;

the communication module is also configured for sending a second instructional data for controlling the dilution refrigerator at a set temperature.

In the above quantum computer operating system, wherein, preferably, the quantum computer operating system further comprises:

an automatic calibration service module configured for calibrating the qubits in the quantum chip to improve the availability of qubits in the quantum chip by improving the fidelity of the qubits.

In the above quantum computer operating system, wherein, preferably, the quantum computer operating system further comprises:

a user interaction module configured for providing a user with an interactive window for quantum computing-related operations.

In the above quantum computer operating system, wherein, preferably, the quantum computing related operations comprise quantum measurement and control experiment operations, quantum computer hardware parameter setting operations, and one or combination of consoles.

In the above quantum computer operating system, wherein, preferably, the quantum measurement and control experiment comprise a qubit energy spectrum experiment, a qubit relaxation time and/or coherence time determination experiment, a qubit logic gate determination and/or calibration experiment or a combination thereof.

In the above quantum computer operating system, wherein, preferably, the quantum computer operating system further comprises:

a device monitoring service module configured for monitoring working status of the quantum computer hardware.

Another aspect of the present disclosure provides a quantum computer, on which the quantum computer operating system is provided.

Compared with the prior art, in the quantum computer operating system provided by the present disclosure, the current topology of the available qubits in the quantum chip is obtained through the qubit managing service module; the quantum computing task scheduling-managing service module determines the quantum computing task to be processed from current unprocessed quantum computing tasks by combining the current topology; the compilation-optimizing service module compiles the quantum computing task to be processed to obtain the executable quantum circuit that can be executed on the quantum chip; the quantum computing task scheduling-managing service module determines the quantum computing task to be assigned according to the priority of the executable quantum circuit; the communication module is in communication with the quantum computer hardware that implements assignment, execution as well as feedback on an execution result, of the quantum computing task to be assigned, thereby implementing the scheduling of the quantum computing tasks. During determining and processing the quantum computing task to be assigned, it is possible to be done based on the current topology of the available qubits in the quantum chip, and compile the quantum computing task to be processed into the executable quantum circuit that can be executed in the quantum chip, thereby implementing scheduling of the quantum computing tasks, fully considering the quantum computing resources from the quantum chip, and improving the computing efficiency of the quantum computer; at the same time, after compilation, the quantum computing task to be processed is converted into an executable quantum circuit that can be executed in the quantum chip, thereby improving the stability of the quantum computer, and thus improving the practicality of the quantum computer.

The objective of the present disclosure is also to provide a quantum computing task scheduling method, device, and quantum computer operating system for solving shortcomings in the prior art, which can improve the utilization efficiency of computing resources of quantum chips and improve computing efficiency.

An aspect of the present disclosure provides a quantum computing task scheduling method, and the method comprises:

obtaining the current topology of the quantum chip;

for a quantum computing task represented by a quantum circuit received up to the current moment, obtaining, according to the number of qubits contained in the quantum circuit, a quantum circuit matching the current topology of the quantum chip as a quantum circuit to be processed;

compiling each quantum circuit to be processed to obtain an executable quantum circuit that can be executed on the quantum chip;

determining the executing time of the executable quantum circuit according to the time sequence of the executable quantum circuit;

determining the quantum computing task to be scheduled according to the priority of each executable quantum circuit, wherein: the priority is determined according to the executing time and the waiting time of the corresponding quantum computing task.

In the above quantum computing task scheduling method, wherein, preferably, said "for a quantum computing task represented by a quantum circuit received up to the current moment, obtaining, according to the number of qubits contained in the quantum circuit, a quantum circuit matching the current topology of the quantum chip as a quantum circuit to be processed", comprises:

for the quantum computing task received up to the current moment, determining the quantum computing task to be analyzed in order from short to long according to the waiting time of the quantum computing task;

for the determined current quantum computing task to be analyzed, obtaining the number of qubits contained in the corresponding quantum circuit;

determining whether the number of corresponding qubits is less than or equal to the number of qubits contained in the current topology of the quantum chip;

if so, determining the quantum circuit corresponding to the current quantum computing task to be analyzed to be a quantum circuit to be processed.

In the above quantum computing task scheduling method, wherein, preferably, said "compiling the quantum circuit to obtain an executable quantum circuit that can be executed on the quantum chip", comprises:

establishing a qubit mapping relationship between the qubits contained in the quantum circuit and the qubits contained in the current topology of the quantum chip;

processing the quantum circuit based on the qubit mapping relationship to obtain an executable quantum circuit in which each quantum logic gate can be directly executed on the quantum chip.

In the above quantum computing task scheduling method, wherein, preferably, "processing the quantum circuit based on the qubit mapping relationship", comprises:

decomposing the two-qubit logic gate and/or multi-qubit logic gate contained in the quantum circuit based on the qubit mapping relationship.

In the above quantum computing task scheduling method, wherein, preferably, "processing the quantum circuit based on the qubit mapping relationship", comprises:

optimizing the quantum circuit.

In the above quantum computing task scheduling method, wherein, preferably, "determining the executing time of the executable quantum circuit according to the time sequence of the executable quantum circuit", comprises:

hierarchically dividing the time sequence of the executable quantum circuit according to the parallelism of the quantum computing;

determining the task executing time required by the time sequence of the layer according to the type of quantum logic gate contained in the sub-quantum circuit in the time sequence of each layer;

determining the executing time required for the quantum circuit according to the task executing time required by the time sequence of all layers.

In the above quantum computing task scheduling method, wherein, preferably, said "determining the task executing time required by the time sequence of the layer according to the type of quantum logic gate contained in the sub-quantum circuit in the time sequence of each layer", comprises:

obtaining a first time required for each type of quantum logic gate to operate on a quantum chip;
determining the longest first time corresponding to the quantum logic gate in each layer as the task executing time required by the time sequence of the layer.

In the above quantum computing task scheduling method, wherein, preferably, the formula for calculating the priority is as follows:

$$priority = \frac{waiting\ time + \text{executing time}}{\text{executing time}};$$

Said "determining the quantum computing task to be scheduled according to the priority of each executable quantum circuit", comprises:
determining the quantum computing task to be scheduled according to the priority from high to low.
In the above quantum computing task scheduling method, wherein, preferably, the method further comprises:

obtaining the proportion of qubits required for the executable quantum circuit in the qubits contained in the current topology of the quantum chip;
determining the quantum computing task to be scheduled according to the proportion from low to high.

In the above quantum computing task scheduling method, wherein, preferably, the method further comprises: sending the determined quantum computing task to be scheduled to the quantum computer hardware comprising the quantum chip to perform the quantum computing.
Another aspect of the present disclosure provides a quantum computing task scheduling device, which comprises:

a qubit managing service module configured for obtaining the current topology of the quantum chip;
a quantum computing task scheduling-managing service module configured for obtaining, according to the number of qubits contained in the quantum circuit, for a quantum computing task represented by a quantum circuit received up to the current moment, a quantum circuit matching the current topology of the quantum chip as a quantum circuit to be processed;
a compilation-optimizing service module configured for compiling each quantum circuit to be processed to obtain an executable quantum circuit that can be executed on the quantum chip;
executing time determining module configured for determining the executing time of the executable quantum circuit according to the time sequence of the executable quantum circuit;
a quantum computing task scheduling-managing service module configured for further determining the quantum computing task to be scheduled according to the priority of each executable quantum circuit, wherein: the priority is determined according to the executing time and the waiting time of the corresponding quantum computing task.

Yet another aspect of the present disclosure provides a storage medium in which the computer program is stored, wherein the computer program is set to execute any one of the above methods at runtime.
Yet another aspect of the present disclosure provides an electronic device comprising a memory and a processor, the memory is stored with a computer program therein, and the processor is set to run the computer program to execute any one of the above methods.
Yet another aspect of the present disclosure provides a quantum computer operating system, and the quantum computer operating system implements the scheduling of the quantum computing task according to any of the above quantum computing task scheduling methods.
Yet another aspect of the present disclosure provides a quantum computer, and the quantum computer comprises the above quantum computer operating system.
Compared with the prior art, in the procedure of scheduling the quantum computing tasks in the present disclosure, by obtaining the current topology of the quantum chip to obtain the dynamic resources of the quantum chip, then obtaining, according to the number of qubits contained in the quantum circuit, the quantum circuit matching the current topology of the quantum chip, so as to achieve the preliminary matching of the quantum computing task to be scheduled, then compiling each quantum circuit to be processed to obtain the executable quantum circuit that can be executed on the quantum chip so as to accurately match the preliminarily matched quantum computing task with the dynamic resources of the quantum chip, and finally performing schedule according to the priority which also takes into account the waiting time and executing time of the quantum computing task, it is possible to improve the utilization rate of computing resources of quantum chips as a whole, improve the quantum computing efficiency tasks being scheduled, and jointly improve the computational quantum computing efficiency.

The objective of the present disclosure is also to provide a quantum computing task scheduling method, device, and quantum computer operating system for solving shortcomings in the prior art, which can the utilization efficiency of quantum chip computing resources, improve the efficiency of scheduled tasks, and improve the quantum computing efficiency.

An aspect of the present disclosure provides a quantum computing task scheduling method, which comprises:

obtaining the current topology of the quantum chip;

obtaining a plurality of quantum computing tasks, wherein: the sum of the number of qubits required by each quantum computing task is less than or equal to the number of qubits contained in the current topology;

processing the quantum circuit corresponding to each quantum computing task as one first quantum circuit, wherein the first quantity circuit is an executable quantum circuit that can be executed on the quantum chip;

sending the first quantum circuit to the quantum computer hardware to implement the computing of each quantum computing task, and obtaining the scheduling result of each quantum computing task according to the computing result.

In the above quantum computing task scheduling method, wherein, optionally, "processing the quantum circuit corresponding to each quantum computing task as one first quantum circuit", comprises:

combining the quantum circuits directly to obtain the first quantum circuit.

In the above quantum computing task scheduling method, wherein, optionally, "processing the quantum circuit corresponding to each quantum computing task as one first quantum circuit", comprises:

optimizing each of the quantum circuits;

combining each of the optimized quantum circuits to obtain the first quantum circuit.

In the above quantum computing task scheduling method, wherein, optionally, said "optimizing each of the quantum circuits", comprises:

a simplified optimization of each quantum circuit, a decomposition optimization of the quantum logic gate or a combination thereof.

In the above quantum computing task scheduling method, wherein, optionally, "processing the quantum circuit corresponding to each quantum computing task as one first quantum circuit", further comprises:

compiling each of the combined quantum circuits to obtain a first quantum circuit.

In the above quantum computing task scheduling method, wherein, optionally, said "combining each of the optimized quantum circuits", comprises:

determining mapping bits corresponding to the qubits contained in each quantum circuit according to the current topology of the quantum chip;

updating the qubits in the quantum circuit according to the mapping bits to obtain the updated quantum circuit;

integrating each updated quantum circuit by time sequence according to the mapping bits.

In the above quantum computing task scheduling method, wherein, optionally, said "obtaining the scheduling result of each quantum computing task according to the computing result", comprises:

obtaining quantum states representing computing results;

obtaining sub-quantum states corresponding to mapping bits corresponding to each quantum computing task in the quantum states;

obtaining the probability corresponding to each sub-quantum state as the scheduling result of the corresponding quantum computing task.

In the above quantum computing task scheduling method, wherein, optionally, "obtaining quantum states representing computing results", comprises:

determining the eigenstate of all mapping bits corresponding to each quantum circuit;

obtaining the measured probability corresponding to each eigenstate.

Another aspect of the present disclosure provides a quantum computing task scheduling device, which comprises:

a first obtaining module configured for obtaining the current topology of the quantum chip;

a second obtaining module configured for obtaining a plurality of quantum computing tasks, wherein: the sum of the number of qubits required by each quantum computing task is less than or equal to the number of qubits contained in the current topology;

a first processing module configured for processing the quantum circuit corresponding to each quantum computing task as one first quantum circuit, wherein the first quantity circuit is an executable quantum circuit that can be executed on the quantum chip;

a second processing module configured for sending the first quantum circuit to the quantum computer hardware to implement the computing of each quantum computing task, and obtaining the scheduling result of each quantum computing task according to the computing result.

Yet another aspect of the present disclosure provides a storage medium in which the computer program is stored, wherein the computer program is set to execute any one of the above methods at runtime.

Yet another aspect of the present disclosure provides an electronic device comprising a memory and a processor, the memory is stored with a computer program therein, and the processor is set to run the computer program to execute any one of the above methods.

Yet another aspect of the present disclosure provides a quantum computer operating system, and the quantum computer operating system implements the scheduling of the quantum computing task according to any of the above quantum computing task scheduling methods.

Yet another aspect of the present disclosure provides a quantum computer operating system, and the quantum computer comprises the above quantum computer operating system.

Compared with the prior art, in the procedure of scheduling the quantum computing tasks in the present disclosure, obtaining the current topology of the quantum chip first; then obtaining a plurality of quantum computing tasks according to the current topology, processing the quantum circuit corresponding to each quantum computing task as one first quantum circuit, then sending the first quantum circuit to the quantum computer hardware to implement the computing of each quantum computing task, and obtaining the scheduling result of each quantum computing task according to the computing result. Throughout the process, by determining the quantum computing tasks that can currently be processed based on the current topology of the quantum chip, then processing the quantum circuit corresponding to each quantum computing task as one first quantum circuit, and sending and executing the first quantum circuit at one time to complete the scheduling of a plurality of quantum computing tasks at one time, it is possible to improve the utilization rate of computing resources of quantum chips as a whole, improve the quantum computing efficiency tasks being scheduled, and jointly improve the computational quantum computing efficiency.

The objective of the present disclosure is also to provide a quantum computing task computing method and device, a storage medium, and an electronic device, as well as a quantum computer operating system and a quantum computer.

An aspect of the present disclosure is to provide a quantum computing task computing method, comprising:

obtaining the current topology of the quantum chip;

obtaining a plurality of quantum computing tasks in the task queue, and determining the priority and bit requirements of each quantum computing task;

determining each quantum computing task supported by the current topology as a scheduled task according to the priority and bit requirements of each quantum computing task;

processing the quantum circuit corresponding to each scheduled task to obtain an executable quantum circuit;

executing quantum computing on the executable quantum circuit based on the quantum chip with the current topology, and determining computing results respectively corresponding to each scheduled task according to execution results.

In the above method, the step of determining the priority of each quantum computing task, comprises:

obtaining the type of each quantum computing task;

if the types are all unspecified bits, determining priority of each quantum computing task according to a high response ratio priority principle.

In the above method, the step of determining the priority of each quantum computing task, further comprises: if the types are all unspecified bits, determining priority of each quantum computing task according to a first-come first-served principle.

In the above method, the step of determining the priority of each quantum computing task, further comprises: if the types include the type of specified bits and the type of unspecified bits, the quantum computing tasks corresponding to the type of specified bits having a higher priority than the quantum computing tasks corresponding to the type of unspecified bis.

In the above method, the step of determining each quantum computing task supported by the current topology as a scheduled task according to the priority and bit requirements of each quantum computing task, comprises:

obtaining the quantum computing task with the highest priority in the task queue;
determining whether the current topology satisfies the corresponding bit requirements and remaining physical bits in the current topology according to the bit requirements on the currently obtained quantum computing task;
if so, determining the currently obtained quantum computing task as the scheduled task, and updating the current topology with the remaining physical bits; if not, not determining the currently obtained quantum computing task as the scheduled task;
obtaining the quantum computing task with the next priority in the task queue and returning to the step of determining whether the current topology satisfies the corresponding bit requirements and remaining physical bits in the current topology according to the bit requirements on the currently obtained quantum computing task.

In the above method, the step of processing the quantum circuit corresponding to each scheduled task to obtain an executable quantum circuit, comprises:
combining the quantum circuit corresponding to each scheduled task to obtain the executable quantum circuit.

In the above method, the step of combining the quantum circuit corresponding to each scheduled task to obtain the executable quantum circuit, comprises:

determining mapping bits in the current topology corresponding to the qubits contained in each quantum circuit according to the quantum circuit corresponding to each scheduled task;
updating the qubits in each quantum circuit with the mapping bits to obtain the corresponding updated quantum circuit;
integrating each updated quantum circuit according to the execution time sequence of the quantum logic gate to obtain the executable quantum circuit.

In the above method, the step of executing quantum computing on the executable quantum circuit, comprises:

compiling the executable quantum circuit to obtain corresponding waveform instructions;
sending the signal corresponding to the waveform instructions to the quantum chip with the current topology to achieve quantum computing.

In the above method, the step of determining computing results respectively corresponding to each scheduled task according to execution results, comprises:

obtaining a quantum state representing the execution result;
determining the sub-quantum state in the quantum state corresponding to the mapping bits which correspond to each scheduled task;
taking the probability corresponding to each sub-quantum state as the computing result corresponding to the scheduled task.

In the above method, the step of obtaining a quantum state representing the execution result, comprises:

determining the eigenstate of all mapping bits corresponding to each quantum circuit;
obtaining the measured probability corresponding to each eigenstate.

A second aspect of the present disclosure provides a quantum computing task computing device, which comprises:

a first obtaining module configured for obtaining the current topology of the quantum chip;
a second obtaining module configured for obtaining a plurality of quantum computing tasks in the task queue, and determining the priority and bit requirements of each quantum computing task
a task determining module configured for determining each quantum computing task supported by the current topology as a scheduled task according to the priority and bit requirements of each quantum computing task;
a circuit processing module configured for processing the quantum circuit corresponding to each scheduled task to obtain an executable quantum circuit;
an computing execution module configured for executing quantum computing on the executable quantum circuit based on the quantum chip with the current topology, and determining computing results respectively corresponding to each scheduled task according to execution results.

A third aspect of the present disclosure provides a storage medium in which the computer program is stored, wherein the computer program is set to execute the above methods at runtime.

A fourth aspect of the present disclosure provides an electronic device comprising a memory and a processor, the memory is stored with a computer program therein, and the processor is set to run the computer program to execute the above methods.

A fifth aspect of the present disclosure provides a quantum computer operating system, and the quantum computer operating system implements quantum computing task computing according to the method.

A sixth aspect of the present disclosure provides a quantum computer, and the quantum computer comprises the quantum computer operating system.

Compared with the prior art, the present disclosure facilitates the realization of synchronous parallel computing of a plurality of quantum computing tasks on the current topology by obtaining the current topology of the quantum chip, obtaining a plurality of quantum computing tasks in the task queue, and determining the priority and bit requirements of each quantum computing task; then, determining each quantum computing task supported by the current topology as a scheduled task according to the priority and bit requirements of each quantum computing task; then processing the quantum circuit corresponding to each scheduled task to obtain an executable quantum circuit; finally, executing quantum computing on the executable quantum circuit based on the quantum chip with the current topology, and determining computing results respectively corresponding to each scheduled task according to execution results. It should be emphasized that, the present disclosure determines the best combination of the quantum computing tasks scheduled this time based on the current topology of the quantum chip according to the priority and bit requirements of each quantum computing task in the task queue, so as to make full use of the computing resources of the current topology to implement parallel computing of a plurality of quantum computing tasks on the same quantum chip when the corresponding bit requirements of a plurality of quantum computing tasks are different, therefore maximizing the use of the computing resources of the quantum chip and improve the quantum computing efficiency.

**BRIEF DESCRIPTION OF THE DRAWINGS**

FIG. 1 is a structural block diagram of a quantum computer in one embodiment of the present disclosure;
FIG. 2 is a schematic module diagram of a quantum computer operating system provided in one embodiment of the present disclosure;
FIG. 3 is a schematic block diagram of a quantum computer operating system provided in another embodiment of the present disclosure.
FIG. 4 is a schematic module diagram of a quantum computer operating system provided in yet another embodiment of the present disclosure.
FIG. 5 is a schematic illustration of a quantum computer operating system provided by embodiments of the present disclosure;
FIG. 6.1 is a quantum circuit used in one embodiment;
FIG. 6.2 is a quantum chip topology used in one embodiment;
FIG. 6.3 is a quantum chip topology used in one embodiment.
FIG. 7 is a structural block diagram of a hardware of a computer terminal of a quantum computing task scheduling method provided by an embodiment of the present disclosure;
FIG. 8 is a schematic flowchart of a quantum computing task scheduling method provided by an embodiment of the present disclosure;
FIG. 9.1 is a quantum circuit used in one embodiment;
FIG. 9.2 is a quantum chip topology used in one embodiment;
FIG. 9.3 is a quantum chip topology used in one embodiment;
FIG. 10.1 is a quantum circuit used in one embodiment;
FIG. 10.2 is a result of dividing time sequences of a quantum circuit of an embodiment shown FIG. 10.1;
FIG. 11 is a quantum computing task scheduling device provided by another embodiment of the present disclosure.
FIG. 12 is a structural block diagram of a hardware of a computer terminal of a quantum computing task scheduling method provided by an embodiment of the present disclosure;
FIG. 13 is a schematic flowchart of a quantum computing task scheduling method provided by an embodiment of the present disclosure;
FIG. 14.1 is a schematic illustration of a quantum circuit of a first quantum computing task in one embodiment of the present disclosure;

FIG. 14.2 is a schematic illustration of a quantum circuit of a second quantum computing task in one embodiment of the present disclosure;

FIG. 14.3 is a schematic illustration of a quantum circuit of a third quantum computing task in one embodiment of the present disclosure;

FIG. 15 is a schematic illustration of a first quantum circuit in one embodiment of the present disclosure;

FIG. 16 is a quantum computing task scheduling device provided by another embodiment of the present disclosure.

FIG. 17 is a structural block diagram of a hardware of a computer terminal of a quantum computing task computing method provided by an embodiment of the present disclosure;

FIG. 18 is a graphical display of 1# quantum circuit provided in an embodiment of the present disclosure;

FIG. 19 is a schematic flowchart of a quantum computing task computing method provided by an embodiment of the present disclosure;

FIG. 20 is a schematic structural diagram of a quantum computing task computing device provided by an embodiment of the present disclosure.

Description of reference signs:

10-first quantum computing hardware device,
11-processor,
12-memory,
100-quantum computer operating system,
20-second quantum computing hardware device,
21-quantum chip,
102-quantum program compiling-optimizing service module,
104-communication module,
106-qubit managing service module,
108-automatic calibration service module,
110-quantum computing task scheduling-managing service module,
1001-qubit managing service module,
1002a quantum computing task scheduling-managing service module,
1003compilation-optimizing service module,
1004-communication module,
1102-processor,
1104-memory,
1106-transmission device,
1108-input-output device,
5101-qubit managing service module,
5102-quantum computing task scheduling-managing service module,
5103-compilation-optimizing service module,
5104-executing time determining module,
1202-processor,
1204-memory,
1206-transmission device,
1208-input-output device,
5201-first obtaining module,
5202-second obtaining module,
5203-first processing module,
5204-second processing module,
1302-processor,
1304-memory,
1306-transmission device,
1308-input-output device,
6301-first obtaining module,
6302-second obtaining module,
6303-task determining module,
6304-circuit processing module,
6305-computing execution module.

## DETAILED DESCRIPTION

The embodiments described below with reference to the accompanying drawings are exemplary and are intended to explain the invention only and are not to be construed as limiting the invention.

It should be noted that, unless otherwise specified, the relative arrangement, numerical expressions and values of the components and steps described in these embodiments do not limit the scope of the present disclosure.

The following description of at least one exemplary embodiment is in fact illustrative only and in no way serves as a limitation on the present disclosure and its application or use.

The techniques, methods and equipment known to those of ordinary skill in the relevant art may not be discussed in detail, but where appropriate, said technology, methods and equipment shall be considered as part of the specification.

In all the examples shown and discussed herein, any specific values should be interpreted as exemplary only, rather than as limitations. Thus, other examples of exemplary embodiments may have different values.

It should be noted that similar designations and letters indicate similar terms in the drawings below, so that once an item is defined in one drawing, it does not need to be further discussed in subsequent drawings.

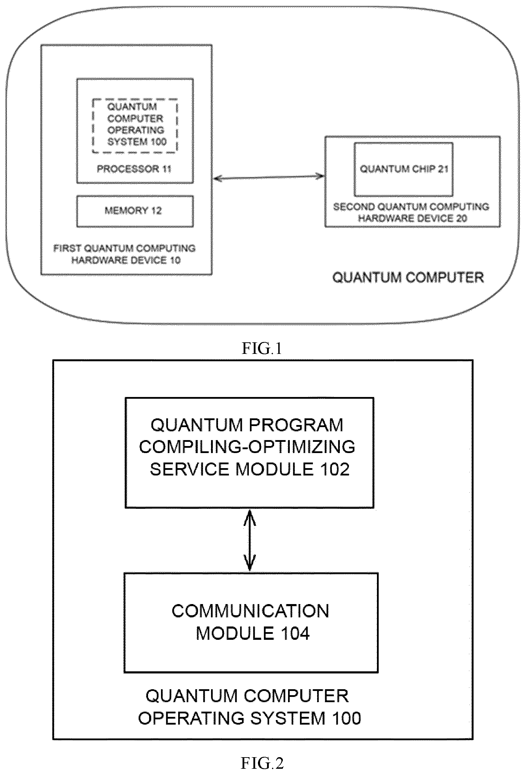

FIG. 1 shows a structural block diagram of a quantum computer in an embodiment of the present disclosure.

As shown in FIG. 1, a quantum computer includes a first quantum computing hardware device 10 and a second quantum computing hardware device 20.

A quantum computer operating system 100 is set on the first quantum computing hardware device 10. The first quantum computing hardware device 10 may include a processor 11, and may also include a memory 12. The quantum computer operating system 100 may be implemented by the processor 11 and the memory 12. The second quantum computing hardware device 20 is in communication with the first quantum computing hardware device 10. The second quantum computing hardware device 20 includes a quantum chip 21.

The quantum computer operating system 100 includes a communication module. The quantum computer operating system 100 generates quantum computing tasks. The communication module sends the quantum computing tasks to the second quantum computing hardware device 20 for executing quantum computing.

The quantum computer operating system 100 is a computer program that manages quantum computing software and hardware resources. The following refers to FIGS. 2, 3, 4 to describe the relevant modules of each embodiment.

FIG. 2 is a schematic block diagram of a quantum computer operating system provided in one embodiment of the present disclosure.

As shown in FIG. 2, the quantum computer operating system 100 comprises: a quantum program compiling-optimizing service module 102 and a communication module 104.

The quantum program compiling-optimizing service module 102 is configured for implement the following processes:

- obtaining a quantum program to be executed,
- obtaining a topology of a qubit in a quantum chip of a second quantum computing hardware device, and
- compiling the quantum program into quantum computing tasks based on the topology.

The communication module 104 is configured for sending the quantum computing tasks to the second quantum computing hardware device 20 for quantum computing.

Due to the current restrictions of quantum computing, some components of classical operating systems cannot be transferred to quantum operating systems. Unlike traditional computers, the computing units in quantum computers are quantum chips, and the quantum chips may have many different types, for example, superconducting quantum chips, semiconductor quantum dot quantum chips, quantum well quantum chips, optical quantum chips, quantum topological quantum chips, etc. Different quantum chips have different properties. Therefore, if the quantum program is designed directly for each different kind of quantum chip, it requires the designer to have a deep understanding of the underlying quantum chip. In addition, when porting such a quantum program to other quantum computers, the quantum program needs to be rewritten due to changes in quantum chips, which will bring huge obstacles to the programming and use of quantum computers. In this embodiment, by setting a quantum program compiling-optimizing service module in the quantum computer operating system, it is possible to eliminate the dependence of the quantum program on the quantum chip. In this way, the same quantum program may be used on different quantum chips.

In addition, since the state of the quantum chip changes when it is used, it is possible to adapt the compiled quantum computing task to the current state of the quantum chip by using the quantum program compiling-optimizing service module. For example, the quantum computing task includes quantum circuits.

For example, the quantum program may be program source code or object code. In one embodiment, the quantum program is program code in an intermediate language. The intermediate language can be a programming language that sits between the source programming language and the object code language. The source programming language is closer to human language, making it easier for a designer to understand and use. The designer can more efficiently use the source programming language to design a desired application. The object code is easier for a quantum computer to understand and run. However, as mentioned above, the object code is neither compatible with different quantum chips, nor does it take into account the peculiarities of the quantum chips, such as changes in the current state of the quantum chips. Therefore, the object code lacks flexibility for the quantum computer. The program code used herein in the intermediate language may be adapted to the characteristics of the quantum computer. For example, the program code in the intermediate language is easier to parse and compile by the quantum program compiling-optimizing service module than the source programming language, which can improve the execution efficiency and performance of the quantum computer. On the other hand, the quantum program compiling-optimizing service module can parse and compile the program code in the intermediate language based on the state of the quantum computer. Therefore, compared with the object code, the program code in the intermediate language can bring greater compatibility and flexibility with the quantum computer.

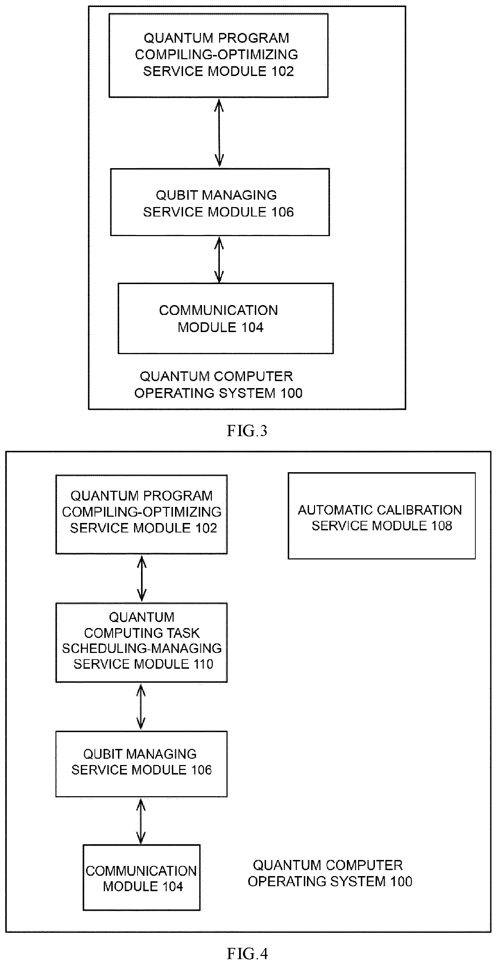

FIG. 3 illustrates a schematic block diagram of a quantum computer operating system provided in another embodiment of the present disclosure.

As shown in FIG. 3, the quantum computer operating system 100 includes a quantum program compiling-optimizing service module 102 and a communication module 104. The quantum program compiling-optimizing service module 102 and the communication module 104 may be the corresponding modules shown in FIG. 2, and the description about them will not be repeated hereon.

Further, the quantum computer operating system 100 further comprises: a qubit managing service module 106.

In one embodiment, the qubit managing service module 106 is configured for implementing the following processes:

- receiving the quantum computing tasks from the quantum program compiling-optimizing service module,
- obtaining a current topology of an available qubit in the quantum chip of the second quantum computing hardware device, and
- selecting a quantum computing task to be processed from the quantum computing tasks based on the current topology, wherein qubits required by the quantum computing task to be processed match the current topology.

Here, the communication module 104 sends the quantum computing task to be processed to the second quantum computing hardware device 20.

Unlike a classical computer system, the current state of the quantum chip needs to be taken into account when assigning the quantum computing task to the quantum chip. Otherwise, it may cause the problem that the current state of the quantum chip cannot execute the assigned quantum computing task, thereby causing the computation of the quantum chip to be interrupted or the computation efficiency to be reduced. When the quantum computing task to be processed is selected in consideration of the current topology of the available qubits, it is possible to enable the selected quantum computing task to be processed to be adapted to the current state of the quantum chip, therefore avoiding the situation that the quantum chip cannot execute the quantum computing task. The number of qubits require for that quantum computing task to be processed may be less than or equal to the number of qubits in the current topology. For example, depending on the current quantum chip occupancy, only 3 qubits are available. In this case, the qubit managing service module 106 may choose to use the quantum computing task to be processed with less than 3 qubits, and sent it to the communication module 104. In this way, it is possible to prevent the quantum computing task requiring more qubits from blocking the processing of the quantum chip.

The quantum program compiling-optimizing service module 102 may also take into account the state of the current quantum chip when performing compiling. In one example, the topology is the current topology of the available qubits in the quantum chip 21 of the second quantum computing hardware device 20. The quantum program compiling-optimizing service module 102 compiles the quantum program into quantum computing tasks based on the current topology.

In this way, the quantum program compiling-optimizing service module 102 may generate corresponding quantum computing tasks by using the current state of the quantum chip, thereby facilitating assignment of subsequent quantum computing tasks and improving the overall operation performance of the quantum computer.

The current topology may be communicated to the quantum program compiling-optimizing service module 102 by the qubit managing service module 106. For example, the qubit managing service module 106 is used for obtaining the current topology of the available qubits in the quantum chip 21 of the second quantum computing hardware device 20, and sending the current topology to the quantum program compiling-optimizing service module 102.

FIG. 4 shows a schematic block diagram of a quantum computer operating system provided in another embodiment of the present disclosure.

As shown in FIG. 4, the quantum computer operating system 100 includes a quantum program compiling-optimizing service module 102, a qubit managing service module 106 and a communication module 104. The quantum program compiling-optimizing service module 102, the qubit managing service module 106, and the communication module 104 may be the modules shown in FIGS. 2 and 3, so descriptions thereof will not be repeated herein.

In addition, the quantum computer operating system 100 further includes a quantum computing task scheduling-managing service module 110.

The quantum computing task scheduling-managing service module 110 is configured for determining the quantum computing task to be assigned according to the priority of the quantum computing task, wherein the priority is determined based on the waiting time and the executing time of the quantum computing task. By the quantum computing task scheduling-managing service module 110, it is possible to control the execution of the quantum computing task as a whole and prevent a certain quantum computing task from being excessively delayed.

In addition, as shown in FIG. 4, the quantum computer operating system 100 may further include an automatic calibration service module 108.

The automatic calibration service module 108 is used for automatically testing and calibrating the quantum chip. The automatic calibration service module 108 may improve the availability of qubits on the quantum chip by improving the fidelity of the qubits.

In another embodiment, the quantum computer operating system may be installed in the quantum computer shown in FIG. 1.

The quantum computer operating system disclosed herein may be provided in the computer readable storage medium. Thus, the embodiments disclosed herein further provide a computer-readable storage medium having stored therein executable commands of a quantum computer operating system, which when executed by a processor, implement the quantum computer operating system described herein.

Thus, embodiments disclosed herein may include a quantum computer operating systems, a quantum computer, and/or a quantum computer program product. The quantum computer program product may include a computer readable storage medium having stored therein executable commands of a quantum computer operating system.

The quantum computer readable storage medium can be a tangible device that can retain and store instructions for use by an instruction execution device. The quantum computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the quantum computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

The quantum computer readable program instructions described herein can be downloaded to respective computing/processing devices from a quantum computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The executable instructions for implementing the quantum computer operating system may be assembler instructions, instruction-set-architecture (ISA) instructions, machine instructions, machine dependent instructions, microcode, firmware instructions, state-setting data, or either source code, intermediate code or object code written in any combination of one or more programming languages, comprising an object oriented programming language such as Smalltalk, C++ or the like, and conventional procedural programming languages, such as the "C" programming language or similar programming languages. The executable instructions may execute entirely on the quantum computer, partly on the quantum computer, as a stand-alone software package, partly on the quantum computer and partly on a remote computer or entirely on the remote computer or server. In the latter scenario, the remote computer may be connected to the quantum computer through any type of network, comprising a local area network (LAN) or a wide area network (WAN), or the connection may be made to an external quantum computer (for example, through the Internet using an Internet Service Provider). In some embodiments, electronic circuitry comprising, for example, programmable logic circuitry, field-programmable gate arrays (FPGA), or programmable logic arrays (PLA) may execute the quantum computer readable program instructions by utilizing state information of the quantum computer readable program instructions to personalize the electronic circuitry, in order to perform aspects of the present disclosure.

Aspects of the present disclosure are described herein with reference to block diagrams of the quantum computer operating system, the quantum computer, and/or the quantum computer program product according to embodiments of the invention. It will be understood that each block of the block diagrams, and combinations of blocks, can be implemented by readable program instructions of the quantum computer.

These quantum computer executable instructions can be provided to general-purpose computers, special purpose computer, or other programmable data processing apparatus to produce a quantum computer machine, such that the instructions, which execute via the processor of the quantum computer or other programmable data processing apparatus, create means for implementing the functions/acts specified in a block or blocks. These executable instructions may also be stored in a quantum computer readable storage medium that can direct a quantum computer, a programmable data processing apparatus, and/or other devices to function in a particular manner, such that the quantum computer readable storage medium having instructions stored therein comprises an article of manufacture comprising instructions which implement aspects of the function/process specified in a block or blocks.

The quantum computer readable program instructions may also be loaded onto a quantum computer, other programmable quantum data processing apparatus, or other quantum device to cause a series of operational processes to be performed on the quantum computer, other programmable quantum data processing apparatus or other quantum device to produce a quantum computer implemented process, such that the instructions which execute on the quantum computer, other programmable quantum data apparatus, or other quantum device implement the functions/processes specified in a block or blocks.

The block diagrams in the Figures illustrate the architecture, functionality, and process of possible implementations of the quantum computer operating system, the quantum computer, and/or the quantum computer program product according to various embodiments of the present disclosure. In this regard, each block in block diagrams may represent a module, segment, or portion of code, which comprises one or more quantum computer executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams, and combinations of blocks in the block diagrams, can be implemented by special purpose hardware-based quantum systems that perform the specified functions or acts, or combinations of special purpose hardware and quantum computer instructions. It is well-known to a person skilled in the art that the implementations of using hardware, using software, or using the combination of software and hardware can be equivalent.

A quantum computer is a type of physical device that follows the laws of quantum mechanics to perform high-speed mathematical and logical operations, store and process quantum information. When a device processes and computes quantum information and runs quantum algorithms, it is a quantum computer.

It should be noted that the real quantum computer is a hybrid structure, which contains two parts: one part is the first quantum computing hardware device, which is responsible for the operation and computing of the quantum program to achieve the transformation and control of control instructions; the other part is the second quantum computing hardware device, which is responsible for executing the quantum program to achieve quantum computing. The first quantum computing hardware device is in communication with the second quantum computing hardware device, and the first quantum computing hardware device controls the operation of the second quantum computing hardware device.

The above quantum program is a sequence of instructions written in a quantum language such as QRunes that can run on a quantum computer, enabling support for quantum logic gate operations and ultimately quantum computing.

Specifically, the quantum program is a sequence of instructions that manipulate a quantum logic gate according to a certain time sequence. The quantum circuit, as an embodiment of a quantum program, is also known as a quantum logic circuit, is the most commonly used general-purpose quantum computation model, represents a circuit that operates on a qubit in an abstract concept, consists of a qubit, a circuit (a timeline), and a variety of quantum logic gates, and is often required to read out the results of the final quantum measurement operation.

Unlike a conventional circuit where metal wires are connected to transmit a voltage or current signal, in the quantum circuit, the circuit can be viewed as connected by time, i.e., the state of the qubit evolves naturally over time following the instructions of the Hamiltonian operator, until it encounters a logic gate and is operated.

A quantum program as a whole corresponds to a total quantum circuit. The quantum program in this disclosure refers to the total quantum circuit, wherein the total number of qubits in the total quantum circuit is the same as the total number of qubits in the quantum program. It can be understood that a quantum program can be composed of a quantum circuit, measurement operations for the qubits in the quantum circuit, a register for storing the measurement results, and a control flow node (jump instruction). A quantum circuit can contain tens, hundreds or even thousands of quantum logic gate operations. The process of executing a quantum program is the process of executing all quantum logic gates according to a certain time sequence. It should be noted that time sequence is the time sequence in which a single quantum logic gate is executed.

It should be noted that in classical computing, the most basic unit is a bit, and the most basic control mode is a logic gate. The purpose of controlling the circuit can be achieved through the combination of logic gates. Similarly, the way to handle qubits is quantum logic gates. Quantum states can be evolved using quantum logic gates. Quantum logic gates are the basis of quantum circuits, quantum logic gates are generally represented by unitary matrices, and unitary matrices are not only in the form of matrices, but also a kind of operation and transformation. Quantum logic gates are defined by the number of qubits they act on. For example, acting on a qubit is defined as a single-bit quantum logic gate, such as the common basic single-qubit logic gate: Hadamard gate (H gate, Hadamard gate), Pauli-X gate (X gate), Pauli-Y gate (Y gate) , Pauli-Z gate (Z gate), RX gate, RY gate, RZ gate, etc.; acting on two qubits is defined as a double-bit quantum logic gate, such as the common basic double-bit quantum logic gate, such as CNOT gate, iSWAP gate, the operation matrix corresponding to the basic double-bit quantum logic gate is 4*4 dimensional and the values of the elements in the operation matrix are determined, and there is also any two-qubit logic gate U acting on two qubits whose corresponding operation matrix is 4*4 dimensional but the value of the elements in the operation matrix is uncertain but is set by the programmer on demand; multi-bit quantum logic gate, such as Toffoli gate, etc..

In the process of quantum computing, the quantum operating system set in the first quantum computing hardware device may determine the computing efficiency and stability of the quantum computer, and then determine the practicality of the quantum computer, so it is urgent to develop a quantum computer operating system.

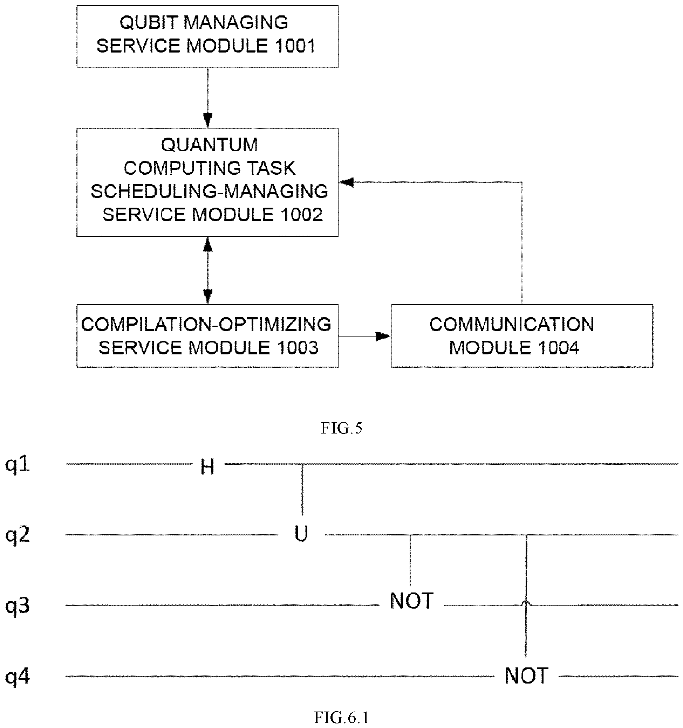

As shown in FIG. 5, embodiments of the present disclosure provide a quantum computer operating system, comprising: a qubit managing service module 1001, a quantum computing task scheduling-managing service module 1002, a compilation-optimizing service module 1003 and a communication module 1004.

Specifically, the qubit managing service module 1001 is configured for obtaining the current topology of the available qubits on the quantum chip; the quantum computing task scheduling-managing service module 1002 is configured for determining the quantum computing task to be processed from the currently unprocessed quantum computing tasks, wherein the number of the qubits required by the quantum computing task to be processed is less than or equal to the number of the qubits in the current topology; the compilation-optimizing service module 1003 is configured for compiling the quantum computing task to be processed to obtain an executable quantum circuit that can be executed on the quantum chip; the quantum computing task scheduling-managing service module 1002 is further configured for determining the quantum computing task to be assigned according to the priority of the executable quantum circuit, wherein: the priority of the executable quantum circuit is determined according to the executing time of the executable quantum circuit executed by the quantum chip and the waiting time of the corresponding quantum computing task; the communication module 1004 is configured for being in communication with the quantum computer hardware that implements assignment, execution as well as feedback on an execution result, of the quantum computing task to be assigned.

In the quantum computer operating system provided by the embodiment of the present disclosure, the current topology of the available qubits in the quantum chip is obtained through the qubit managing service module; the quantum computing task scheduling-managing service module determines the quantum computing task to be processed from current unprocessed quantum computing tasks by combining the current topology; the compilation-optimizing service module compiles the quantum computing task to be processed to obtain the executable quantum circuit that can be executed on the quantum chip; the quantum computing task scheduling-managing service module is further configured for determining the quantum computing task to be assigned according to the priority of the executable quantum circuit; the communication module is configured for being in communication with the quantum computer hardware that implements assignment, execution as well as feedback on an execution result, of the quantum computing task to be assigned. During determining and processing the quantum computing task to be assigned, it is possible to be done based on the current topology of the available qubits in the quantum chip, and compile the quantum computing task to be processed into the executable quantum circuit that can be executed in the quantum chip, thereby implementing scheduling of the quantum computing tasks, fully considering the quantum computing resources from the quantum chip, and improving the computing efficiency of the quantum computer; at the same time, after compilation, the quantum computing task to be processed is converted into an executable quantum circuit that can be executed in the quantum chip, thereby improving the stability of the quantum computer, and thus improving the practicality of the quantum computer.

It should be noted that the above quantum chip is a processor that executes quantum computing in a quantum computer, and the qubits contained in the quantum chip are the processing unit of the processor. Limited by the development of hardware manufacturing technology of the quantum chip, the increase of the number and utilization of qubits contained in the quantum chip is one of the factors restricting the computing power of quantum computing. Therefore, it is necessary to schedule qubits on the quantum chip reasonably and adequately when scheduling the quantum computing task.

The topology of the quantum chip reflects the spatial characteristics of qubits on the quantum chip, which determines availability of the quantum chip as computational resources. The spatial characteristics of the qubits include the number, location, and connection relationship of the qubits contained in the quantum chip.

The current topology of the quantum chip reflects the current availability of the quantum chip as computing resources, which can be determined according to the availability of the qubits on the quantum chip. The availability of the qubits exemplary includes: the occupied condition of the qubits, the fidelity of the qubits determining whether they can be used. A high-fidelity qubits may be obtained through calibration.

The process of compiling the quantum computing task to be processed to obtain the executable quantum circuit that can be executed on the quantum chip also needs to be performed based on the topology of the quantum chip.

Specifically, the requirements that can be performed on the quantum chip are as follows: on the one hand, the current computing resources of the quantum chip are determined by the number of qubits contained in the current topology of the quantum chip; on the other hand, the quantum logic gate included in the quantum circuit can be implemented on the qubits of the quantum chip, for example, a two-quantum logic gate contained in the quantum circuit corresponds to two characteristic bits, and when the two characteristic bits are mapped to the quantum chip, the two mapping bits must be connected by an edge, so that the two-quantum logic gate can be directly implemented on the quantum chip.

Therefore, for obtaining an executable quantum circuit that can be executed on the quantum chip, it is necessary to compile the quantum circuit to be processed according to the current topology of the quantum chip, so as to process the quantum logic gates contained in the quantum circuit to be processed into quantum logic gates that can be directly executed on the quantum chip, and the quantum circuit composed of the latter is an executable quantum circuit.

Exemplary, "compiling the quantum circuit to be processed" may include:
establishing a qubit mapping relationship between the qubits contained in the quantum circuit and the qubits contained in the current topology of the quantum chip; processing the quantum circuit based on the qubit mapping relationship to obtain an executable quantum circuit in which each quantum logic gate can be directly executed on the quantum chip.

Specifically, when establishing a qubit mapping relationship between the qubits contained in the quantum circuit and the qubits contained in the current topology of the quantum chip, it is necessary to take into account the mapping relationship between the number of qubits and the mapping relationship of the connection relationship between qubits, and the connection relationship between qubits is determined by quantum logic gates in the quantum circuit; the connection relationship between qubits is determined in the current topology of the quantum chip according to the spatial characteristics of the qubits on the quantum chip.

Exemplary, a mapping example is provided in which the number of qubits and the connection relationship of qubits are satisfied. The quantum circuits H1, U (1, 2), CNOT (2, 3) and CNOT (2, 4) as shown in FIG. 6.1 respectively indicate that the H gate acts on q1, the U gate acts on q1 and q2 simultaneously, the CNOT gate acts on q2 and q3 simultaneously, and the CNOT gate acts on q2 and q4 simultaneously. The quantum circuit includes four qubits, and requires a connection relationship between q1 and q2, a connection relationship between q2 and q3, and a connection relationship between q2 and q4.

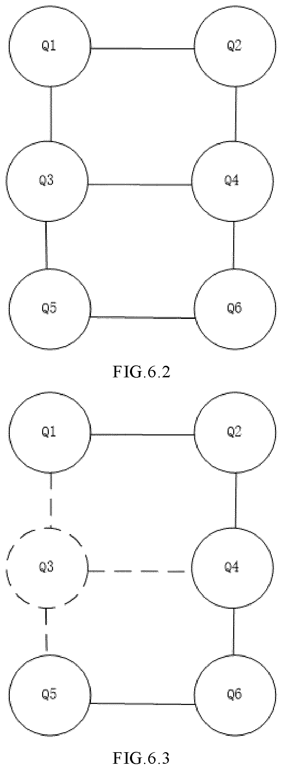

The topology of the quantum chip shown in FIG. 6.2 contains a total of 6 qubits Q1, Q2, Q3, Q4, Q5 and Q6. Therefore, the topology of the quantum chip shown in FIG. 6.2 and the quantum circuit shown in FIG. 6.1 meet a basic mapping conditions for the number of qubits; considering the connection relationship between the qubits in the quantum circuit shown in FIG. 6.1 and the connection relationship between the qubits in the topology of the quantum chip shown in FIG. 6.2, the mapping result is determined as q2 mapped to Q3 or Q4, and then the corresponding mapping bits of q1, q3 and q4 are determined as needed, exemplary, respectively, Q1, Q4 and Q5.

At this time, entering a procedure of processing the quantum circuit based on the mapping relationship of the qubits to obtain an executable quantum circuit in which each contained quantum logic gate can be directly executed on the quantum chip, this procedure processes the quantum circuit, exemplary, such as the optimization of the quantum circuit; the optimization operation of quantum circuits, exemplary, can be a simplified optimization of quantum circuits achieved by deleting two adjacent quantum logic gates with common operation results of the unit matrix, or other optimization operations executed on quantum circuits, which are not specifically restricted herein.

Again, a mapping example is provided that satisfies the number of the qubits but does not satisfy the connection relationship of the qubits. For example, the quantum circuits H1, U(1, 2), CNOT(2, 3), and CNOT(2, 4) shown in FIG. 6.1 indicate that the H gate acts on q1, the CNOT gate acts on q1 and q2 for the first time, the CNOT gate acts on q2 and q3 simultaneously, and the CNOT gate acts on q2 and q4 simultaneously. The quantum circuit includes four qubits, and requires a connection relationship between q1 and q2, a connection relationship between q2 and q3, and a connection relationship between q2 and q4.

FIG. 6.3 shows the topology of the quantum chip when Q3 cannot be used, including a total of 5 qubits Q1, Q2, Q4, Q5 and Q6. Therefore, the topology of the quantum chip shown in FIG. 6.3 and the quantum circuit shown in FIG. 6.1 meet the basic qubit mapping conditions; considering the connection relationship between the qubits in the quantum circuit shown in FIG. 6.1 and the connection relationship between the qubits in the topology of the quantum chip shown in FIG. 6.3, the mapping result is determined as q2 mapped to Q4, and then the corresponding mapping bits of q1, q3 and q4 are determined as needed, exemplary, respectively, Q1, Q2 and Q6.

At this time, the U (1,2) gate in the quantum circuit shown in FIG. 6.1 cannot be directly implemented, and then entering a procedure of processing the quantum circuit based on the mapping relationship of the qubits to obtain an executable quantum circuit in which each contained quantum logic gate can be directly executed on the quantum chip, this procedure processes the quantum circuit, exemplary, including one of the decomposition of any two-qubit logic gate and the decomposition of the multi-qubit logic gates, or a combination thereof.

In addition, the executing time of the executable quantum circuit can be determined according to the time sequence of the quantum circuit, and the time sequence of the quantum circuit represents the execution order and time of each quantum logic gate contained in the quantum circuit, and the time required to execute the quantum circuit can be obtained according to the time sequence.

It is understandable that the available qubits include unused and calibrated qubits, and the qubits that meet this condition can improve the accuracy of quantum computing tasks being scheduled, thereby improving the accuracy of quantum computing.

The quantum computer hardware described in the present embodiment may include a quantum measuring and controlling system, and the quantum measuring and controlling system are configured for providing a signal to the quantum chip and receiving the output signal of the quantum chip;

the communication module is configured for sending a first instructional data and receiving a first result data from the quantum measuring and controlling system, wherein the first instructional data is used for controlling the quantum measuring and controlling system to output a signal acceptable to the quantum chip corresponding to the quantum computing task to be assigned.

Exemplary, the quantum measuring and controlling system includes a voltage source, a digital-to-analog converter, an analog-to-digital converter, etc., for converting the first instructional data into an analog signal that can be executed by the quantum chip, and the analog signal represents a corresponding executable quantum circuit, so the first instructional data is the data that can be received by the quantum measuring and controlling system of the corresponding executable quantum circuit.

At the same time, the quantum measuring and controlling system collects the analog signal after performing the quantum computing task by the quantum chip, converts it into the first result data, and sends the first result data to the quantum computing task scheduling-managing service module through the communication module.

The quantum computer hardware described in the present embodiment may further comprise a dilution refrigerator configured for providing the operating temperature of the quantum chip; the communication module is also configured for sending a second instructional data for controlling the dilution refrigerator at a set temperature.

Specifically, the second instructional data can be preconfigured, or it can be automatically adjusted, exemplary, regulated by a preset control system according to the temperature of the monitored dilution refrigerator, exemplary, the preset control system is a control system based on PID (proportional integral differentiation) control algorithm.

The quantum computer operating system described in the present embodiment further comprises: an automatic calibration service module configured for calibrating the qubits in the quantum chip to improve the availability of qubits in the quantum chip by improving the fidelity of the qubits.

It is understood that in the quantum computer operating system, the automatic calibration service module provides calibration processes, algorithms, etc. to achieve qubit calibration, and these calibration processes, algorithms, etc. are sent to the above second quantum computing hardware device in the form of instructions through the communication module, thereby realizing the calibration of qubits on the quantum chip of the second quantum computing hardware.

The quantum computer operating system described in the embodiment of the present disclosure further comprises a user interaction module configured for providing the user with an interactive window for quantum computing-related operations.

Exemplary, the quantum computing related operations comprise quantum measurement and control experiment operations, quantum computer hardware parameter setting operations, and one or combination of consoles.

The exemplary quantum measurement and control experiment comprises a qubit energy spectrum experiment, a qubit relaxation time and/or coherence time determination experiment, a qubit logic gate determination and/or calibration experiment or a combination thereof. It should be noted that the qubit energy spectrum experiment is used to calibrate the frequency of the qubit, the qubit relaxation time determination experiment is used to determine the relaxation time of the qubit, and the qubit coherence time determination experiment is used to determine the coherence time of the qubit. It can be understood that the relaxation time and the coherence time are two main parameters of the qubit. The qubit logic gate determination calibration experiment is used to determine the analog signals required to implement the qubit logic gate, and the qubit logic gate calibration experiment is used to calibrate the analog signals required to implement the qubit logic gate. The hardware parameter setting operation of the quantum computer exemplary includes setting of relevant parameters of the measuring and controlling system, or setting of relevant parameters of the dilution refrigerator, etc.; the present embodiment is not specifically limited.

The quantum computer operating system described in the embodiments of the present disclosure further comprises a device monitoring service module configured for monitoring working status of the quantum computer hardware.

It should be noted that the quantum computer hardware described in the present disclosure is the second quantum computing hardware device described above, including quantum chip hardware, dilution refrigerator hardware that provides a quantum chip operating environment, and measuring and controlling system hardware that provides analog signals required for quantum chip operation.

Another embodiment of the present disclosure provides a quantum computer, and the quantum computer comprises any of the above-described quantum computer operating system.

The embodiment of the present disclosure further provides a quantum computing task scheduling method, which can be applied to an electronic device, such as a computer terminal, specifically, an ordinary computer, a quantum computer, etc.

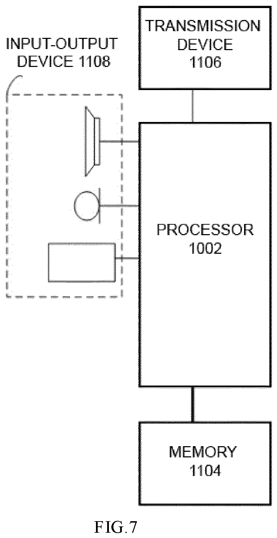

It will be described in detail below by taking running on a computer terminal as an example. FIG. 7 is a structural block diagram of hardware of a computer terminal of a quantum computing task scheduling method provided by an embodiment of the present disclosure. As shown in FIG. 7, the computer terminal may include one or more (only one is shown in FIG. 7) processors 1102 (the processors 1102 may include, but are not limited to, a processing device such as a microprocessor MCU or a programmable logic device FPGA) and a memory 1104 for storing data. Optionally, the above computer terminal may further include a transmission device 1106 and an input-output device 1108 for a communication function. Those skilled in the art can understand that the structure shown in FIG. 7 is only schematic, and does not limit the structure of the computer terminal. For example, the computer terminal may also include more or fewer components than shown in FIG. 7, or have a different configuration than shown in FIG. 7.

The memory 1104 may be used to store a software program as well as a module for application software, such as program instructions/modules corresponding to the quantum computing task scheduling method in embodiments of the present disclosure. The processor 1102 executes various functional applications as well as data processing, i.e., implements the above-described method, by running the software program as well as the module stored in the memory 1104. The memory 1104 may include a high-speed random memory, and may also include a non-volatile memory, such as one or more magnetic storage devices, flash memory, or other non-volatile solid-state memory. In some examples, the memory 1104 may further include memories set remotely relative to the processor 1102, and these remote memories may be connected to the computer terminal via a network. An example of the network includes, but is not limited to, the Internet, an enterprise intranet, a local area network, a mobile communication network, and combinations thereof.

The transmission device 1106 is used to receive or send data via a network. A specific example of the above network may include a wireless network provided by a communications provider of a computer terminal. In one example, the transmission device 1106 includes a Network Interface Controller (NIC) that may be connected to other network devices via a base station so that it may communicate with the Internet. In one example, the transmission device 1106 may be a Radio Frequency (RF) module for communicating wirelessly with the Internet.

It should be noted that a real quantum computer is hybrid in structure and consists of two main parts: a classical computer, which is responsible for performing classical computation and control, and a quantum device, which is responsible for running a quantum program and thus realizing quantum computation. The quantum program is a sequence of instructions written in a quantum language, such as QRunes, that can be run on the quantum computer, which enables support for a quantum logic gate operation and ultimately quantum computation. Specifically, the quantum program is a sequence of instructions that operates the quantum logic gate in a certain time sequence.

The quantum circuit, as an embodiment of a quantum program, is also known as a quantum logic circuit, is the most commonly used general-purpose quantum computation model, represents a circuit that operates on a qubit in an abstract concept, consists of a qubit, a circuit (a timeline), and a variety of quantum logic gates, and is often required to read out the results of the final quantum measurement operation.

Unlike a conventional circuit where metal wires are connected to transmit a voltage or current signal, in the quantum circuit, the circuit can be viewed as connected by time, i.e., the state of the qubit evolves naturally over time following the instructions of the Hamiltonian operator, until it encounters a logic gate and is operated.

A quantum program as a whole corresponds to a total quantum circuit. The quantum program in this disclosure refers to the total quantum circuit, wherein the total number of qubits in the total quantum circuit is the same as the total number of qubits in the quantum program. It can be understood that a quantum program can be composed of a quantum circuit, measurement operations for the qubits in the quantum circuit, a register for storing the measurement results, and a control flow node (jump instruction). A quantum circuit can contain tens, hundreds or even thousands of quantum logic gate operations. The process of executing a quantum program is the process of executing all quantum logic gates according to a certain time sequence. It should be noted that time sequence is the time sequence in which a single quantum logic gate is executed.

It should be noted that in classical computing, the most basic unit is a bit, and the most basic control mode is a logic gate. The purpose of controlling the circuit can be achieved through the combination of logic gates. Similarly, the way to handle qubits is quantum logic gates. Quantum states can be evolved using quantum logic gates. Quantum logic gates are the basis of quantum circuits, quantum logic gates are generally represented by unitary matrices, and unitary matrices are not only in the form of matrices, but also a kind of operation and transformation. Quantum logic gates are defined by the number of qubits they act on. For example, acting on a qubit is defined as a single-bit quantum logic gate, such as the common basic single-qubit logic gate: Hadamard gate (H gate, Hadamard gate), Pauli-X gate (X gate), Pauli-Y gate (Y gate) , Pauli-Z gate (Z gate), RX gate, RY gate, RZ gate, etc.; acting on two qubits is defined as a double-bit quantum logic gate, such as the common basic double-bit quantum logic gate, such as CNOT gate, CR gate, CZ gate, iSWAP gate, the operation matrix corresponding to the basic double-bit quantum logic gate is 4*4 dimensional and the values of the elements in the operation matrix are determined, and there is also any two-qubit logic gate U acting on two qubits whose corresponding operation matrix is 4*4 dimensional but the value of the elements in the operation matrix is uncertain but is set by the programmer on demand; multi-bit quantum logic gate, such as Toffoli gate, etc..

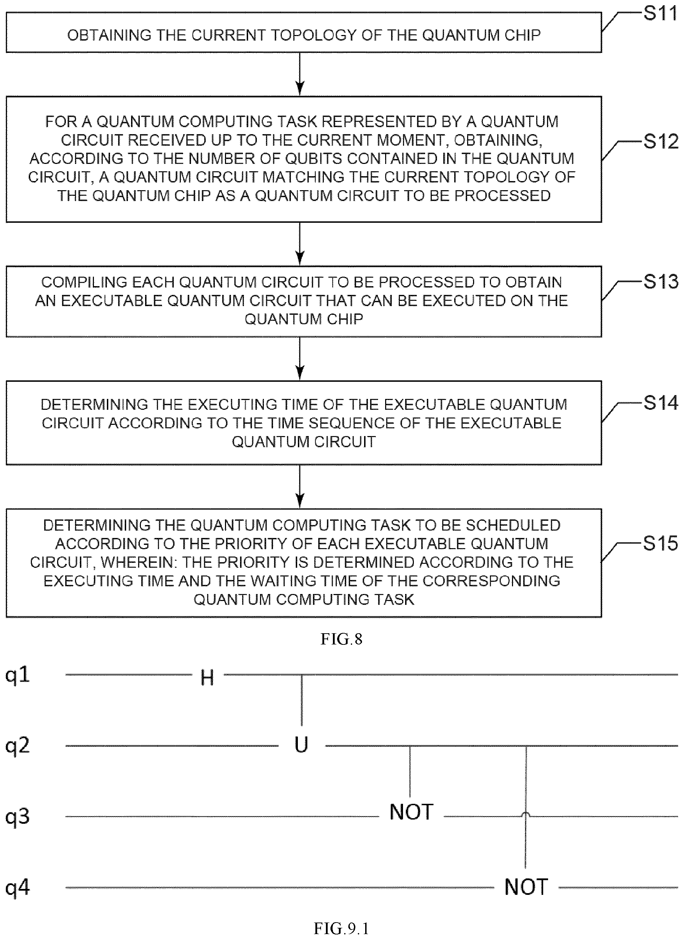

As shown in FIG. 8, an embodiment of the present disclosure provides a quantum computing task scheduling method, which includes:

S 11, obtaining the current topology of the quantum chip;

Specifically, the quantum chip is a processor that performs quantum computation in a quantum computer, and the qubit contained in the quantum chip is the processing unit of the processor. Limited by the development of hardware manufacturing technology of the quantum chip, the increase of the number and utilization of qubits contained in the quantum chip is one of the factors restricting the computing power of quantum computing. Therefore, it is necessary to schedule qubits on the quantum chip reasonably and adequately when scheduling the quantum computing task.

The topology of the quantum chip reflects the spatial characteristics of qubits on the quantum chip, which determines availability of the quantum chip as computational resources. The spatial characteristics of the qubits include the number, location, and connection relationship of the qubits contained in the quantum chip.

The current topology of the quantum chip reflects the current availability of the quantum chip as computing resources, which can be determined according to the availability of the qubits on the quantum chip. The availability of the qubits exemplary includes: the occupied condition of the qubits, the fidelity of the qubits determining whether they can be used.

S12, for a quantum computing task represented by a quantum circuit received up to the current moment, obtaining, according to the number of qubits contained in the quantum circuit, a quantum circuit matching the current topology of the quantum chip as a quantum circuit to be processed;

Specifically, the number of qubits contained in the quantum circuit represents the qubit resources required for executing the corresponding quantum computing task, and a quantum circuit matching the current topology of the quantum chip may be obtained, according to the number of qubits contained in the quantum circuit, as a quantum circuit to be processed.

S 13, compiling each quantum circuit to be processed to obtain an executable quantum circuit that can be executed on the quantum chip;

Specifically, the requirements that can be performed on the quantum chip are as follows: on the one hand, the current computing resources of the quantum chip are determined by the number of qubits contained in the current topology of the quantum chip; on the other hand, the quantum logic gate included in the quantum circuit can be implemented on the qubits of the quantum chip, for example, a two-quantum logic gate contained in the quantum circuit corresponds to two characteristic bits, and when the two characteristic bits are mapped to the quantum chip, the two mapping bits must be connected by an edge, so that the two-quantum logic gate can be directly implemented on the quantum chip.

Therefore, for obtaining an executable quantum circuit that can be executed on the quantum chip, it is necessary to compile the quantum circuit to be processed according to the current topology of the quantum chip, so as to process the quantum logic gates contained in the quantum circuit to be processed into quantum logic gates that can be directly executed on the quantum chip, and the quantum circuit composed of the latter is an executable quantum circuit.

S14, determining the executing time of the executable quantum circuit according to the time sequence of the executable quantum circuit;

Specifically, the time sequence of the quantum circuit represents the execution order and time of each quantum logic gate contained in the quantum circuit, and the time required to execute the quantum circuit can be obtained according to the time sequence.

S15, determining the quantum computing task to be scheduled according to the priority of each executable quantum circuit, wherein: the priority is determined according to the executing time and the waiting time of the corresponding quantum computing task.

In the quantum task scheduling method provided by the embodiment described by steps S11 to S15, determining a quantum circuit to be processed corresponding to the quantum computing task to be processed according to the current topology of the quantum chip, compiling each quantum circuit to be processed to obtain an executable quantum circuit that can be executed on the quantum chip; determining the executing time of the executable quantum circuit according to the time sequence of the executable quantum circuit; determining the quantum computing task to be scheduled according to the priority of each executable quantum circuit, wherein: the priority is determined according to the executing time and the waiting time of the corresponding quantum computing task, therefore determining the scheduling of quantum computing tasks represented by the quantum circuits.

Compared with the prior art which only considers the waiting time of quantum computing tasks and is scheduled in the form of submitting first and running first regardless of the dynamic resources of the quantum chip, in the procedure of scheduling the quantum computing tasks in the present disclosure, by obtaining the current topology of the quantum chip to obtain the dynamic resources of the quantum chip, then obtaining, according to the number of qubits contained in the quantum circuit, the quantum circuit matching the current topology of the quantum chip, so as to achieve the preliminary matching of the quantum computing task to be scheduled, then compiling each quantum circuit to be processed to obtain the executable quantum circuit that can be executed on the quantum chip so as to accurately match the preliminarily matched quantum computing task with the dynamic resources of the quantum chip, and finally performing schedule according to the priority which also takes into account the waiting time and executing time of the quantum computing task, it is possible to improve the utilization rate of computing resources of quantum chips as a whole, improve the quantum computing efficiency tasks being scheduled, and jointly improve the computational quantum computing efficiency.

As one implementation of the present embodiment, said "for a quantum computing task represented by a quantum circuit received up to the current moment, obtaining, according to the number of qubits contained in the quantum circuit, a quantum circuit matching the current topology of the quantum chip as a quantum circuit to be processed", may be implemented by the following steps:

for the quantum computing task received up to the current moment, determining the quantum computing task to be analyzed in order from short to long according to the waiting time of the quantum computing task; obtaining the number of corresponding qubits contained in the corresponding quantum circuit regarding to determined current quantum computing task to be analyzed; determining whether the number of corresponding qubits is less than or equal to the number of qubits contained in the current topology of the quantum chip; if so, determining the current quantum computing task to be analyzed as one quantum computing task to be processed.

It should be noted that the above process is implemented iteratively. Specifically, determining one quantum computing task to be analyzed firstly in order from short to long according to the waiting time of the quantum computing task; regarding to determined current quantum computing task to be analyzed, starting a cyclical operation and then obtaining the number of corresponding qubits contained in the corresponding quantum circuit; determining whether the number of corresponding qubits is less than or equal to the number of qubits contained in the current topology of the quantum chip; if so, determining the current quantum computing task to be analyzed as one quantum computing task to be processed, and compiling the quantum circuit to be processed (i.e., the quantum computing task to be processed) to obtain the executable quantum circuit that can be executed on the quantum chip; determining the executing time of the executable quantum circuit according to the time sequence of the executable quantum circuit.

If not, the next quantum computing task to be analyzed is determined by increasing the waiting time. Then, operations within the next cycle are started for the determined quantum computing task to be analyzed.

As one implementation of the present embodiment, said "compiling the quantum circuit to obtain an executable quantum circuit that can be executed on the quantum chip", comprises:

establishing a qubit mapping relationship between the qubits contained in the quantum circuit and the qubits contained in the current topology of the quantum chip, processing the quantum circuit based on the qubit mapping relationship to obtain an executable quantum circuit in which each quantum logic gate can be directly executed on the quantum chip.

Exemplary, a mapping example is provided in which the number of qubits and the connection relationship of qubits are satisfied. The quantum circuits H1, U (1, 2), CNOT (2, 3) and CNOT (2, 4) as shown in FIG. 9.1 respectively indicate that the H gate acts on q1, the U gate acts on q1 and q2 simultaneously, the CNOT gate acts on q2 and q3 simultaneously, and the CNOT gate acts on q2 and q4 simultaneously. The quantum circuit includes four qubits, and requires a connection relationship between q1 and q2, a connection relationship between q2 and q3, and a connection relationship between q2 and q4.

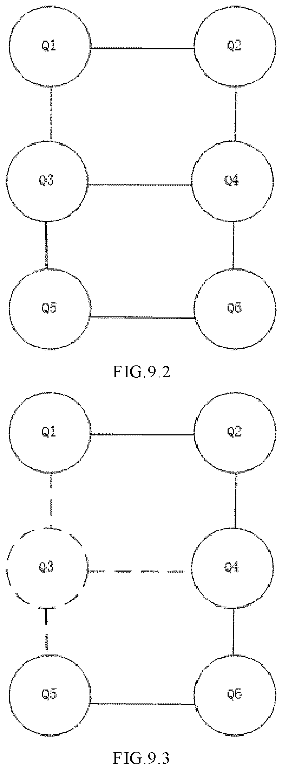

The topology of the quantum chip shown in FIG. 9.2 contains a total of 6 qubits Q1, Q2, Q3, Q4, Q5 and Q9. Therefore, the topology of the quantum chip shown in FIG. 9.2 and the quantum circuit shown in FIG. 9.1 meet a basic mapping conditions for the number of qubits; considering the connection relationship between the qubits in the quantum circuit shown in FIG. 9.1 and the connection relationship between the qubits in the topology of the quantum chip shown in FIG. 9.2, the mapping result is determined as q2 mapped to Q3 or Q4, and then the corresponding mapping bits of q1, q3 and q4 are determined as needed, exemplary, respectively, Q1, Q4 and Q5.

At this time, entering a procedure of processing the quantum circuit based on the mapping relationship of the qubits to obtain an executable quantum circuit in which each contained quantum logic gate can be directly executed on the quantum chip, this procedure processes the quantum circuit, exemplary, such as the optimization of the quantum circuit; the optimization operation of quantum circuits, exemplary, can be a simplified optimization of quantum circuits achieved by deleting two adjacent quantum logic gates with common operation results of the unit matrix, or other optimization operations executed on quantum circuits, which are not specifically restricted herein.

Again, a mapping example is provided that satisfies the number of the qubits but does not satisfy the connection relationship of the qubits. For example, the quantum circuits H1, U(1, 2), CNOT(2, 3), and CNOT(2, 4) shown in FIG. 9.1 indicate that the H gate acts on q1, the CNOT gate acts on q1 and q2 for the first time, the CNOT gate acts on q2 and q3 simultaneously, and the CNOT gate acts on q2 and q4 simultaneously. The quantum circuit includes four qubits, and requires a connection relationship between q1 and q2, a connection relationship between q2 and q3, and a connection relationship between q2 and q4.

FIG. 9.3 shows the topology of the quantum chip when Q3 cannot be used, including a total of 5 qubits Q1, Q2, Q4, Q5 and Q6. Therefore, the topology of the quantum chip shown in FIG. 9.3 and the quantum circuit shown in FIG. 9.1 meet the basic qubit mapping conditions; considering the connection relationship between the qubits in the quantum circuit shown in FIG. 9.1 and the connection relationship between the qubits in the topology of the quantum chip shown in FIG. 9.3, the mapping result is determined as q2 mapped to Q4, and then the corresponding mapping bits of q1, q3 and q4 are determined as needed, exemplary, respectively, Q1, Q2 and Q6.

At this time, the U (1,2) gate in the quantum circuit shown in FIG. 9.1 cannot be directly implemented, and then entering a procedure of processing the quantum circuit based on the mapping relationship of the qubits to obtain an executable quantum circuit in which each contained quantum logic gate can be directly executed on the quantum chip, this procedure processes the quantum circuit, exemplary, including one of the decomposition of any two-qubit logic gate and the decomposition of the multi-qubit logic gates, or a combination thereof.

As one implementation of the present embodiment, said "determining the executing time of the executable quantum circuit according to the time sequence of the executable quantum circuit", comprises:

hierarchically dividing the time sequence of the executable quantum circuit according to the parallelism of the quantum computing; determining the task executing time required by the time sequence of the layer according to the type of quantum logic gate contained in the sub-quantum circuit in the time sequence of each layer; determining the executing time required for the quantum circuit according to the task executing time required by the time sequence of all layers.

The following will exemplary illustrate "hierarchically dividing the time sequence of the executable quantum circuit according to the parallelism of the quantum computing".

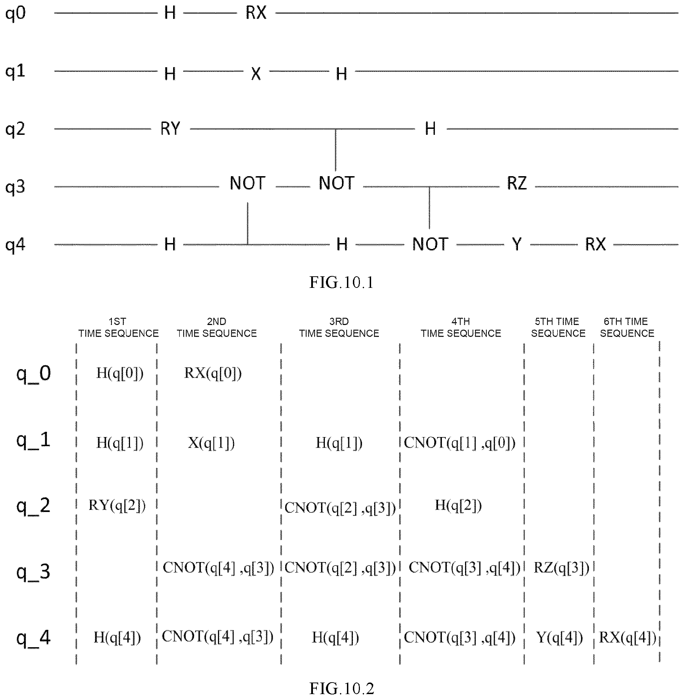

In the quantum circuit as shown in FIG. 10.1, for each qubit, the first (first bit) quantum logic gate to be executed is H, H, RY, CNOT, H, respectively. Wherein, due to the parallelism of quantum computing, single-qubit logic gate operations H(q[0]), H(q[1]), RY(q[2]), H(q[4]) do not affect each other, and may be divided into the same time sequence as quantum logic gates that execute simultaneously within the first time sequence; however, for the two-quantum logic gate CNOT executed by q[3], the qubit operated by the CNOT gate at the same time is q[4], while relative to q[4], the CNOT gate belongs to the quantum logic gate executed by its second bit, and q[4] needs to be executed after the H gate is executed, and if the CNOT gate is divided into the first time sequence, q[4] will execute both the H gate and the CNOT gate, resulting in a conflict. Therefore, the CNOT gate can be extended and placed into the next time sequence. The results of the hierarchical division of the time sequence are shown in FIG. 10.2.

"determining the task executing time required by the time sequence of the layer according to the type of quantum logic gate contained in the sub-quantum circuit in the time sequence of each layer", comprises: obtaining a first time required for each type of quantum logic gate to operate on a quantum chip; determining the longest first time corresponding to the quantum logic gate in each layer as the task executing time required by the time sequence of the layer.

The procedure "determining the task executing time required by the time sequence of the layer according to the type of quantum logic gate contained in the sub-quantum circuit in the time sequence of each layer" will be illustrated by combining 2nd time sequence shown in FIG. 10.2; the 2nd time sequence shown in FIG. 10.2 contains single-qubit logic gates RX (q[0]), X (q[1]) and two-quantum logic gate CNOT (q[4], q[3]), time for the quantum chip to execute the single-qubit logic gate is t1, and time for the quantum chip to execute the two-quantum logic gate is t2; the specific values of t1 and t2 are related to the performance of the quantum computing related hardware built containing the quantum chip, but empirically, the specific value of t2 is greater than the specific value of t1, and thus it is determined that t2 is the task execution time required for the 2nd time sequence.

Then, the task executing time required for the 1st time sequence to the 6th time sequence, respectively, as shown in Fig. 10.2, is accumulated to obtain the executing time required for the quantum circuit.

The executing time required by the quantum circuit determined by the above procedure takes into account the characteristics of the time sequence of the quantum circuit, that is, taking the inherent parallelism characteristics of quantum computing tasks based on quantum circuits into account, which may be used for improving the efficiency with which tasks are scheduled.

As one implementation of the present embodiment, the formula for calculating the said priority is as follows:

$$priority = \frac{waiting\ time\ + \text{executing time}}{\text{executing time}}$$

Said "determining the quantum computing task to be scheduled according to the priority of each executable quantum circuit", comprises: determining the quantum computing task to be scheduled according to the priority from high to low.

By determining the quantum computing tasks to be scheduled from high to low based on the priority determined by the above description, the parallelism of quantum computing can be fully considered, and the priority is introduced through task duration and waiting time, which allows the quantum computing tasks with a long waiting time and a short executing time to be prioritized for scheduling to be executed, thereby improving the efficiency of scheduled tasks.

As one implementation of the present embodiment, the method further comprises:

obtaining the proportion of qubits required for the executable quantum circuit in the qubits contained in the current topology of the quantum chip; determining the quantum computing task to be scheduled according to the proportion from low to high.

As one implementation of the present embodiment, the method further comprises:

determining the quantum computing tasks to be scheduled based on priority from low to high and the occupancy ratio from low to high. It is possible to improve the efficiency of scheduled tasks and increase the utilization of qubits on a quantum chip.

As one implementation of the present embodiment, the method further comprises the procedure of executing scheduling, that is:

sending the determined quantum computing task to be scheduled to the quantum computer hardware comprising the quantum chip to perform the quantum computing.

It can be seen that in the procedure of scheduling the quantum computing tasks in the present disclosure, by obtaining the current topology of the quantum chip to obtain the dynamic resources of the quantum chip, then obtaining, according to the number of qubits contained in the quantum circuit, the quantum circuit matching the current topology of the quantum chip, so as to achieve the preliminary matching of the quantum computing task to be scheduled, then compiling each quantum circuit to be processed to obtain the executable quantum circuit that can be executed on the quantum chip so as to accurately match the preliminarily matched quantum computing task with the dynamic resources of the quantum chip, and finally performing schedule according to the priority which also takes into account the waiting time and executing time of the quantum computing task, it is possible to improve the utilization rate of computing resources of quantum chips as a whole, improve the quantum computing efficiency tasks being scheduled, and jointly improve the computational quantum computing efficiency.

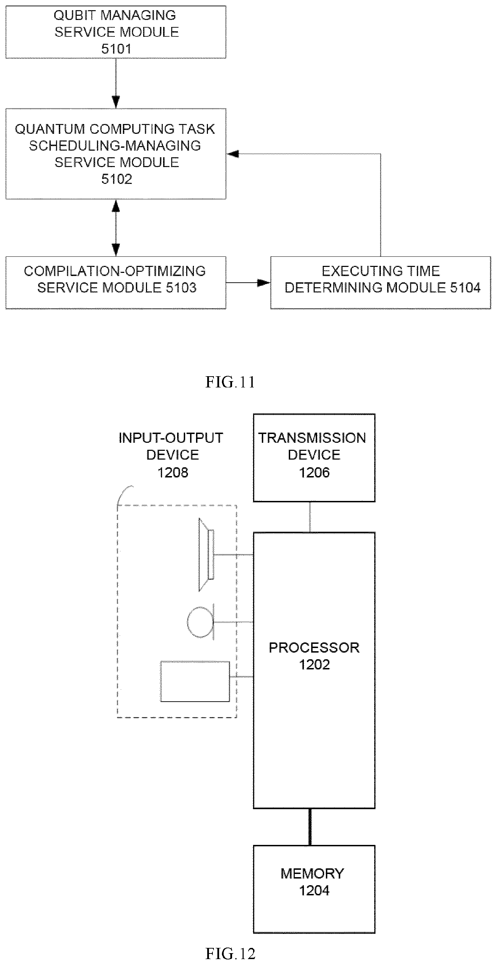

As shown in FIG. 11, another embodiment of the present disclosure provides a quantum computing task scheduling device, which comprises:

a qubit managing service module 5101, configured for obtaining the current topology of the quantum chip;

a quantum computing task scheduling-managing service module 5102, configured for: for a quantum computing task represented by a quantum circuit received up to the current moment, obtaining, according to the number of qubits contained in the quantum circuit, a quantum circuit matching the current topology of the quantum chip as a quantum circuit to be processed;

a compilation-optimizing service module 5103, configured for compiling the quantum computing task to be processed to obtain an executable quantum circuit that can be executed on the quantum chip;

an executing time determining module 5104, configured for determining the executing time of the executable quantum circuit according to the time sequence of the executable quantum circuit;

the quantum computing task scheduling-managing service module 5102, configured for further determining the quantum computing task to be scheduled according to the priority of each executable quantum circuit, wherein: the priority is determined according to the executing time and the waiting time of the corresponding quantum computing task.

Another embodiment of the present disclosure provides a storage medium in which a computer program is stored, wherein the computer program is set to execute the steps of any one of the above method embodiments at runtime.

Specifically, in the present embodiment, the storage medium may be set to store a computer program for performing the following steps:

S11, obtaining the current topology of the quantum chip;

S12, for a quantum computing task represented by a quantum circuit received up to the current moment, obtaining, according to the number of qubits contained in the quantum circuit, a quantum circuit matching the current topology of the quantum chip as a quantum circuit to be processed;

S 13, compiling each quantum circuit to be processed to obtain an executable quantum circuit that can be executed on the quantum chip;

S14, determining the executing time of the executable quantum circuit according to the time sequence of the executable quantum circuit;

S15, determining the quantum computing task to be scheduled according to the priority of each executable quantum circuit, wherein: the priority is determined according to the executing time and the waiting time of the corresponding quantum computing task.

Specifically, in the present embodiment, the above storage media may include, but are not limited to: U disk, read-only memory (ROM), random access memory (RAM), portable hard disk, disk or optical disc and other media that can store computer programs.

Another embodiment of the present disclosure provides an electronic device comprising a memory and a processor, the memory is stored with a computer program therein, and the processor is set to run the computer program to execute the steps of any one of the above method embodiments.

Specifically, the above electronic device may further comprise a transmission device and an input-output device, wherein the transmission device is connected to the above processor, and the input-output device is connected to the above processor.

Specifically, in the present embodiment, the above processor may be set to perform the following steps by a computer program:

S11, obtaining the current topology of the quantum chip;

S12, for a quantum computing task represented by a quantum circuit received up to the current moment, obtaining, according to the number of qubits contained in the quantum circuit, a quantum circuit matching the current topology of the quantum chip as a quantum circuit to be processed;

S 13, compiling each quantum circuit to be processed to obtain an executable quantum circuit that can be executed on the quantum chip;

S14, determining the executing time of the executable quantum circuit according to the time sequence of the executable quantum circuit;

S15, determining the quantum computing task to be scheduled according to the priority of each executable quantum circuit, wherein: the priority is determined according to the executing time and the waiting time of the corresponding quantum computing task.

Another embodiment of the present disclosure provides a quantum computer operating system, and the quantum computer operating system implements the scheduling of the quantum computing tasks according to the quantum computing task scheduling method of any one of the above method embodiments.

Another embodiment of the present disclosure provides a quantum computer, and the quantum computer comprises the quantum computer operating system described in the above embodiment.

The present disclosed embodiment also provides a quantum computing task scheduling method, and the method may be applied to an electronic devices, such as computer terminals, such as ordinary computers, quantum computers, etc.

It will be described in detail below by taking running on a computer terminal as an example. FIG. 12 is a structural block diagram of hardware of a computer terminal of a quantum computing task scheduling method provided by an embodiment of the present disclosure. As shown in FIG. 12, the computer terminal may include one or more (only one is shown in FIG. 12) processors 1202 (the processors 1202 may include, but are not limited to, a processing device such as a microprocessor MCU or a programmable logic device FPGA) and a memory 1204 for storing data. Optionally, the above computer terminal may further include a transmission device 1206 and an input-output device 1208 for a communication function. Those skilled in the art can understand that the structure shown in FIG. 12 is only schematic, and does not limit the structure of the computer terminal. For example, the computer terminal may also include more or fewer components than shown in FIG. 12, or have a different configuration than shown in FIG. 12.

The memory 1204 may be used to store a software program as well as a module for application software, such as program instructions/modules corresponding to the quantum computing task scheduling method in embodiments of the present disclosure. The processor 1202 executes various functional applications as well as data processing, i.e., implements the above-described method, by running the software program as well as the module stored in the memory 1204. The memory 1204 may include a high-speed random memory, and may also include a non-volatile memory, such as one or more magnetic storage devices, flash memory, or other non-volatile solid-state memory. In some examples, the memory 1204 may further include memories set remotely relative to the processor 1202, and these remote memories may be connected to the computer terminal via a network. An example of the network includes, but is not limited to, the Internet, an enterprise intranet, a local area network, a mobile communication network, and combinations thereof.

The transmission device 1206 is used to receive or send data via a network. A specific example of the above network may include a wireless network provided by a communications provider of a computer terminal. In one example, the transmission device 1206 includes a Network Interface Controller (NIC) that may be connected to other network devices via a base station so that it may communicate with the Internet. In one example, the transmission device 1206 may be a Radio Frequency (RF) module for communicating wirelessly with the Internet.

It should be noted that a real quantum computer is hybrid in structure and consists of two main parts: a classical computer, which is responsible for performing classical computation and control, and a quantum device, which is responsible for running a quantum program and thus realizing quantum computation. The quantum program is a sequence of instructions written in a quantum language, such as QRunes, that can be run on the quantum computer, which enables support for a quantum logic gate operation and ultimately quantum computation. Specifically, the quantum program is a sequence of instructions that operates the quantum logic gate in a certain time sequence.

The quantum circuit, as an embodiment of a quantum program, is also known as a quantum logic circuit, is the most commonly used general-purpose quantum computation model, represents a circuit that operates on a qubit in an abstract concept, consists of a qubit, a circuit (a timeline), and a variety of quantum logic gates, and is often required to read out the results of the final quantum measurement operation.

Unlike a conventional circuit where metal wires are connected to transmit a voltage or current signal, in the quantum circuit, the circuit can be viewed as connected by time, i.e., the state of the qubit evolves naturally over time following the instructions of the Hamiltonian operator, until it encounters a logic gate and is operated.

A quantum program as a whole corresponds to a total quantum circuit. The quantum program in this disclosure refers to the total quantum circuit, wherein the total number of qubits in the total quantum circuit is the same as the total number of qubits in the quantum program. It can be understood that a quantum program can be composed of a quantum circuit, measurement operations for the qubits in the quantum circuit, a register for storing the measurement results, and a control flow node (jump instruction). A quantum circuit can contain tens, hundreds or even thousands of quantum logic gate operations. The process of executing a quantum program is the process of executing all quantum logic gates according to a certain time sequence. It should be noted that time sequence is the time sequence in which a single quantum logic gate is executed.

It should be noted that in classical computing, the most basic unit is a bit, and the most basic control mode is a logic gate. The purpose of controlling the circuit can be achieved through the combination of logic gates. Similarly, the way to handle qubits is quantum logic gates. Quantum states can be evolved using quantum logic gates. Quantum logic gates are the basis of quantum circuits, quantum logic gates are generally represented by unitary matrices, and unitary matrices are not only in the form of matrices, but also a kind of operation and transformation. Quantum logic gates are defined by the number of qubits they act on. For example, acting on a qubit is defined as a single-bit quantum logic gate, such as the common basic single-qubit logic gate: Hadamard gate (H gate, Hadamard gate), Pauli-X gate (X gate), Pauli-Y gate (Y gate) , Pauli-Z gate (Z gate), RX gate, RY gate, RZ gate, etc.; acting on two qubits is defined as a double-bit quantum logic gate, such as the common basic double-bit quantum logic gate, such as CNOT gate, CR gate, CZ gate, iSWAP gate, the operation matrix corresponding to the basic double-bit quantum logic gate is 4*4 dimensional and the values of the elements in the operation matrix are determined, and there is also any two-qubit logic gate U acting on two qubits whose corresponding operation matrix is 4*4 dimensional but the value of the elements in the operation matrix is uncertain but is set by the programmer on demand; multi-bit quantum logic gate, such as Toffoli gate, etc..

It should be noted that quantum chips are hardware that implements quantum computing by driving qubits to work by physical signals, and the devices built around the quantum chip to generate physical signals are strictly matched with the qubits contained in the quantum chip. Devices built around the quantum chip to generate physical signals are used as physical hardware devices along with quantum chips, and they can only be controlled and driven once at a time. In the existing procedure of scheduling quantum computing tasks, usually, any quantum computing task is taken as a unit, and the physical hardware devices are scheduled sequentially to implement the computation of the quantum computing task. This procedure greatly reduces the efficiency of scheduling the quantum computing tasks, and cannot ensure the full utilization of the computing resources of quantum chips, therefore affecting the computational quantum computing efficiency.

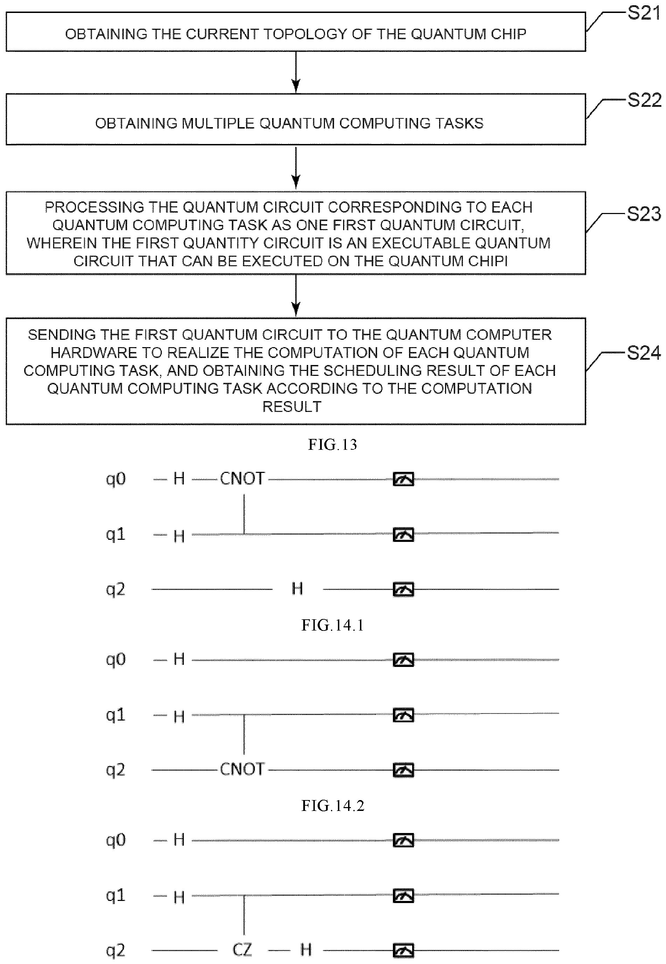

Based on the above, in the schematic flowchart of the quantum computing task scheduling method shown in FIG. 13, an embodiment of the present disclosure provide a quantum computing task scheduling method, which comprises:

S21, obtaining the current topology of the quantum chip;

Specifically, the quantum chip is a processor that performs quantum computation in a quantum computer, and the qubit contained in the quantum chip is the processing unit of the processor. Limited by the development of hardware manufacturing technology of the quantum chip, the increase of the number and utilization of qubits contained in the quantum chip is one of the factors restricting the computing power of quantum computing. Therefore, it is necessary to schedule qubits on the quantum chip reasonably and adequately when scheduling the quantum computing task.

The topology of the quantum chip reflects the spatial characteristics of qubits on the quantum chip, which determines availability of the quantum chip as computational resources. The spatial characteristics of the qubits include the number, location, and connection relationship of the qubits contained in the quantum chip.

The current topology of the quantum chip reflects the current availability of the quantum chip as computing resources, which can be determined according to the availability of the qubits on the quantum chip. The availability of the qubits exemplary includes: the occupied condition of the qubits, the fidelity of the qubits determining whether they can be used.

S22, obtaining a plurality of quantum computing tasks, wherein: the sum of the number of qubits required by each quantum computing task is less than or equal to the number of qubits contained in the current topology;

Specifically, the quantum computing tasks are represented by quantum circuits, the number of qubits contained in the quantum circuit represents the qubit resources required for executing the corresponding quantum computing task, and the quantum computing task that matches the current topology of the quantum chip can be obtained according to the sum of the number of qubits contained in each quantum circuit. Specifically, the sum of the number of qubits required by each quantum computing task is less than or equal to the number of qubits contained in the current topology.

Exemplary, the sum of the number of qubits required for each quantum computing task is equal to the number of qubits contained in the current topology, and this example can realize the full utilization of qubits on the quantum chip.

S23, processing the quantum circuit corresponding to each quantum computing task as one first quantum circuit, wherein the first quantity circuit is an executable quantum circuit that can be executed on the quantum chip;

The requirements that can be performed on the quantum chip are as follows: on the one hand, the current computing resources of the quantum chip are determined by the number of qubits contained in the current topology of the quantum chip; on the other hand, the quantum logic gate included in the quantum circuit can be implemented on the qubits of the quantum chip, for example, a two-quantum logic gate contained in the quantum circuit corresponds to two characteristic bits, and when the two characteristic bits are mapped to the quantum chip, the two mapping bits must be connected by an edge, so that the two-quantum logic gate can be directly implemented on the quantum chip. The quantum circuit composed of quantum logic gates that can be executed directly on the quantum chip is the executable quantum circuit.

S24, sending the first quantum circuit to the quantum computer hardware to realize the computation of each quantum computing task, and obtaining the scheduling result of each quantum computing task according to the computation result.

Specifically, quantum computer hardware refers to the above quantum chip and the device built around the quantum chip to generate physical signals. The results of quantum computing performed by the quantum chip are contained in the quantum state of the qubit, so the scheduling result of each quantum computing task can be obtained by analyzing the quantum state of the qubit.

In addition, continuing with the above characteristic "devices built around the quantum chip to generate physical signals are used as physical hardware devices along with quantum chips, and they can only be controlled and driven once at a time", the quantum circuit corresponding to each quantum computing task is processed as a first quantum circuit, and then a sending operation to apply the instruction signal for implementing the first quantum circuit on the above physical hardware equipment to control and drive the above physical hardware equipment to work, that is, to implement the execution of the first quantum circuit, that is, to implement the computation of each quantum computing task. The whole procedure greatly improves the efficiency of scheduling quantum computing tasks through simultaneous scheduling of multiple tasks.

An embodiment of the present disclosure provides a quantum computing task scheduling method through the above steps S21 to S24, comprising: obtaining the current topology of the quantum chip;obtaining a plurality of quantum computing tasks, wherein: the sum of the number of qubits required by each quantum computing task is less than or equal to the number of qubits contained in the current topology;processing the quantum circuit corresponding to each quantum computing task as one first quantum circuit, wherein the first quantity circuit is an executable quantum circuit that can be executed on the quantum chip;sending the first quantum circuit to the quantum computer hardware to realize the computation of each quantum computing task, and obtaining the scheduling result of each quantum computing task according to the computation result.

In the whole process, by determining the quantum computing tasks which can be processed currently based on the current topology of the quantum chip, then processing the quantum circuit corresponding to each quantum computing task as one first quantum circuit, and sending and executing the first quantum circuit at one time to complete the scheduling processing of a plurality of quantum computing tasks at one time, it is possible to improve the utilization rate of computing resources of quantum chips as a whole, improve the quantum computing efficiency tasks being scheduled, and jointly improve the computational quantum computing efficiency.

As an implementation of the embodiment of the present disclosure, in the procedure of processing the quantum circuit corresponding to each quantum computing task as one first quantum circuit as in the step S23, it is possible to directly combine the quantum circuits corresponding to each quantum computing task, or to optimize the quantum circuits corresponding to each quantum computing task first, and then combine them.

The optimization of the quantum circuit includes, for example, simplification optimization of the quantum circuit and decomposition optimization of the quantum logic gate. For example, the simplification optimization of the quantum circuit can eliminate the redundant quantum logic gate in the quantum circuit; the decomposition optimization of quantum logic gates includes, but is not limited to, decomposition of a multi-quantum logic gate, arbitrary single-quantum logic gate, arbitrary two-quantum logic gate included in a quantum circuit.

The combination processing of the quantum circuits corresponding to various quantum computing tasks may be the sequential splicing combination processing of the quantum circuits, that is, the quantum circuits corresponding to various quantum computing tasks are sequentially connected together as a whole; and they can be processed in other ways, for example, as in an implementation of the embodiment of the present disclosure, said "combining the quantum circuits", comprises:

determining mapping bits corresponding to the qubits contained in each quantum circuit according to the current topology of the quantum chip; updating the qubits in the quantum circuit according to the mapping bits to obtain the updated quantum circuit; integrating each updated quantum circuit by time sequence according to the mapping bits. It can be understood that the mapping bits are qubits in the current topology of the quantum chip, i.e. qubits on the quantum chip.

Exemplary, 3 quantum computing tasks are obtained, and exemplary, as shown in FIG. 14.1, the quantum circuit of the first quantum computing task H(q[0]), H(q[1]), CNOT(q[1], q[0]), H(q[2]), Measure(q[0]), Measure(q[1]), Measure(q[2]), wherein the symbol "⟨image⟩" in FIG. 14.1 indicates a measuring operation on the quantum circuit, which will not be introduced later.

As shown in FIG. 14.2, the quantum circuit of the second quantum computing task H(q[0]), H(q[1]), CNOT(q[1], q[2]), Measure(q[0]), Measure(q[1]), Measure(q[2]).

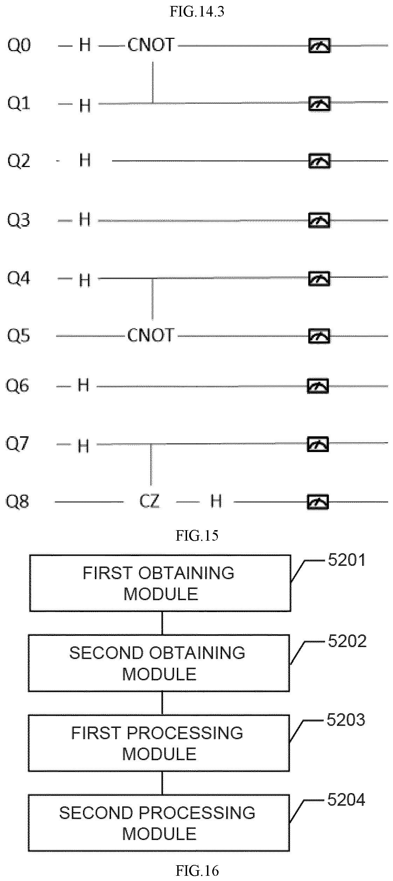

As shown in FIG. 14.3, the quantum circuit of the third quantum computing task H(q[0]), H(q[1]), CZ(q[0], q[2]), H(q[2]), Measure(q[0]), Measure(q[1]), Measure(q[2]).

The number of bits required for the quantum circuit of the first quantum computing task is 3 (i.e. n1=3), the number of bits required for the quantum circuit of the second quantum computing task is 3 (i.e. n2=3), and the number of bits required for the quantum circuit of the third quantum computing task is 3 (i.e. n3=3); the current topology of the quantum chip contains 9 qubits. The mapping bits corresponding to the qubits contained in each quantum circuit are determined according to the current topology of the quantum chip, which can be represented by a mapping relationship reflecting the ordinal relationship of the qubits, as shown in the following table:

| QUANTUM CIRCUIT | QUANTUM CIRCUIT BIT | MAPPING BITS | MAPPING RELATIONSHIP |
|---|---|---|---|
| THE FIRST QUANTUM CIRCUIT | q0 | Q0 | 0 |
| | q1 | Q1 | n1-2 |
| | q2 | Q2 | n1-1 |
| THE SECOND QUANTUM CIRCUIT | q0 | Q3 | n1 |
| | q1 | Q4 | n1+1 |
| | q2 | Q5 | n1+n2-1 |
| THE THIRD QUANTUM CIRCUIT | q0 | Q6 | n1+n2 |
| | q1 | Q7 | n1+n2+1 |
| | q2 | Q8 | n1+n2+n3-1 |

At this time, the mapping bits corresponding to q0, q1 and q2 of the quantum circuit of the first quantum computing task are Q0, Q1 and Q2, respectively; the mapping bits corresponding to q0, q1 and q2 of the quantum circuit of the second quantum computing task are Q3, Q4 and Q5, respectively; the mapping bits corresponding to the quantum circuit q0, q1 and q2 of the third quantum computing task are Q6, Q7 and Q8, respectively; it can be seen that the qubits and mapping bits of the quantum circuit of a quantum computing task can be correlated one-to-one by the serial number of the qubit (that is, the value of the lower right corner of each qubit identification), and such as Q0, Q1, etc. are only identifiers used to distinguish qubits, which can be set as needed by those skilled in the art.

Taking FIG. 14.1, FIG. 14.2 and FIG. 14.3 as examples, the process of updating the qubits in the quantum circuit according to the mapping bits to obtain the updated quantum circuit is introduced.

Specifically, the mapping bits corresponding to q0, q1, and q2 of the quantum circuit of the first quantum computation task shown in FIG. 14.1 are Q0, Q1, and Q2, respectively, then the quantum circuit represented by FIG. 14.1 is updated as H (Q[0]), H (Q[1]), CNOT (Q[1], Q[0]), H (Q[2]), Measure (Q[0]), Measure (Q[1]) and Measure (Q[2]).

The mapping bits corresponding to q0, q1, and q2 of the quantum circuit of the second quantum computation task shown in FIG. 14.2 are Q3, Q4, and Q5, respectively, then the quantum circuit represented by FIG. 14.2 is updated as H(Q[3]), H(Q[4]), CNOT(Q[4], Q[5]), Measure(Q[3]), Measure(Q[4]), Measure(Q[5]).

The mapping bits corresponding to q0, q1, and q2 of the quantum circuit of the third quantum computation task shown in FIG. 14.3 are Q6, Q7, and Q8, respectively, then the quantum circuit represented by FIG. 14.3 is updated as H(Q[6]), H(Q[7]), CZ(Q[6], Q[8]), H(Q[8]), Measure(Q[6]), Measure(Q[7]), Measure(Q[8]).

Then, according to the mapping bits, various updated quantum circuits are integrated according to the time sequence, specifically as follows:

stitching various updated quantum circuits to obtain a total quantum circuit corresponding to all the mapping bits, and adjusting the total quantum circuit according to the time sequence so as to complete the integration of the various updated quantum circuits according to the time sequence.

Exemplary: the total quantum circuit is as follows:

H(Q[0]), H(Q[1]), CNOT(Q[1], Q[0]), H(Q[2]), Measure(Q[0]), Measure(Q[1]), Measure(Q[2]), H(Q[3]), H(Q[4]), CNOT(Q[4], Q[5]), Measure(Q[3]), Measure(Q[4]), Measure(Q[5]), H(Q[6]), H(Q[7]), CZ(Q[6], Q[8]), H(Q[8]), Measure(Q[6]), Measure(Q[7]), Measure(Q[8]).

Said "adjusting the total quantum circuit according to the time sequence" refers to placing the quantum logic gates with consistent time sequence in the total quantum circuit in order of the sequence number of the mapping bits, and exemplary, the quantum circuit obtained by adjusting the total quantum circuit according to the time sequence is as follows, and corresponds to that shown in FIG. 15:

H(Q[0]), H(Q[1]), H(Q[2]), H(Q[3]), H(Q[4]), H(Q[6]), H(Q[7]), CNOT(Q[1], Q[0]), CNOT(Q[4], Q[5]), CZ(Q[6], Q[8]), H(Q[8]), Measure(Q[0]), Measure(Q[1]), Measure(Q[2]), Measure(Q[3]), Measure(Q[4]), Measure(Q[5]), Measure(Q[6]), Measure(Q[7]), Measure(Q[8]).

It should be noted that the time sequence refers to the order in which the quantum logic gates act in the quantum circuit, and due to the parallelism of the qubits at runtime, if the quantum logic gates acting on different qubits can run in parallel at the same time, these quantum logics are within the same time sequence. For more information about the time sequence of the quantum circuits, please refer to Description of the Chinese patent with application No. CN201911117541.1, filed on November 15, 2019, and entitled "GRAPHICAL DISPLAY METHOD, SYSTEM FOR QUANTUM CIRCUIT, STORAGE MEDIA AND ELECTRONIC DEVICE", which will not be expanded in detail herein.

As one implementation of the present embodiment, said "processing the quantum circuit corresponding to each quantum computing task as one first quantum circuit", further comprises: compiling the combined various quantum circuits to obtain the first quantum circuit that can be executed on the quantum chip.

Specifically, the requirements that can be performed on the quantum chip are as follows: on the one hand, the current computing resources of the quantum chip are determined by the number of qubits contained in the current topology of the quantum chip; on the other hand, the quantum logic gate included in the quantum circuit can be implemented on the qubits of the quantum chip, for example, a two-quantum logic gate contained in the quantum circuit corresponds to two characteristic bits, and when the two characteristic bits are mapped to the quantum chip, the two mapping bits must be connected by an edge, so that the two-quantum logic gate can be directly implemented on the quantum chip. The quantum circuit composed of quantum logic gates that can be executed directly on the quantum chip is the executable quantum circuit.

As one implementation of the present embodiment, said "sending the first quantum circuit to the quantum computer hardware to realize the computation of each quantum computing task, and obtaining the scheduling result of each quantum computing task according to the computation result" described in the step S24 is the stage at which the quantum computing tasks are executed and the results are analyzed. Wherein, said "the quantum computing tasks are executed" described above is a procedure of driving the execution of the quantum chip and the devices built around the quantum chip to generate a physical signal, which will not be expanded in detail herein. And said "obtaining the scheduling result of each quantum computing task according to the computation result" can be described in the following procedure.

S241, obtaining quantum states representing computing results;

Specifically, the quantum states representing the computation results are the quantum states of all mapping bits, and can be expressed by eigenstates of the mapping bits and the amplitudes corresponding to the various eigenstates.

It should be noted that the quantum computation result needs to be obtained by statistical measurement, and what is obtained by measurement is the probability that the qubit is in the eigenstate, and the probability is the square of the amplitude. Therefore, in the present disclosure, obtaining the quantum state representing the computing result needs to determine the eigenstates of all mapping bits corresponding to various quantum circuits, and obtain the measured probability corresponding to each eigenstate.

Exemplary, the first quantum circuit obtained for an embodiment, comprises 9 qubits, namely: Q0, Q1, Q2, Q3, Q4, Q5, Q6, Q7, Q8; there are a total of 29 corresponding eigenstates, that is, 512, and the probability of each eigenstate measured is recorded as P, and the quantum states of this group of mapping bits are initially represented as:

$$\psi = \sum_{i=0}^{2^9-1} \sqrt{P_i}\,|\text{eigenstate} >$$

S242, obtaining sub-quantum states corresponding to mapping bits corresponding to each quantum computation task in the quantum states;

Specifically, still taking the first quantum computing task as an example, the corresponding mapping bits are Q0, Q1, Q2, then there are 8 corresponding sub-quantum states, that is, there are $2^3$, and 3 is the number of qubits required for the first quantum computing task, respectively XXXXXX000>, |XXXXXX001>, |XXXXXX010>, |XXXXXX011>, |XXXXXX100>, |XXXXXX101>, |XXXXXX110>, |XXXXXX111>; wherein "X" represents 0 or 1, each sub-quantum state includes 64 eigenstates, that is, contains $2^6$ eigenstates, and 6 is the mapping bits of the quantum chip corresponding to other quantum computing tasks.

S243, obtaining the probability corresponding to each sub-quantum state as the scheduling result of the corresponding quantum computing task.

Specifically, taking the sum of the probabilities of all eigenstates contained in each sub-quantum state as the probability of the sub-quantum state; obtaining the probability of all sub-quantum states of the first quantum computing task as the scheduling result of the first quantum computing task.

Obtaining scheduling result of each quantum computing task according to computation result are completed through steps S241 to S243.

As shown in FIG. 16, another embodiment of the present disclosure provides a quantum computing task scheduling device, which comprises:

a first obtaining module 5201, configured for obtaining the current topology of the quantum chip;
a second obtaining module 5202, configured for obtaining a plurality of quantum computing tasks, wherein: the number of qubits required by each quantum computing task is less than or equal to the number of qubits contained in the current topology;
a first processing module 5203, configured for processing the quantum circuit corresponding to each quantum computing task as one first quantum circuit, wherein the first quantity circuit is an executable quantum circuit that can be executed on the quantum chip;
a second processing module 5204, configured for sending the first quantum circuit to the quantum computer hardware to realize the calculation of each quantum computing task, and obtaining the scheduling result of each quantum computing task according to the computing result.

In the present disclosure, by determining the quantum computing tasks which can be processed currently based on the current topology of the quantum chip, then processing the quantum circuit corresponding to each quantum computing task as one first quantum circuit, and sending and executing the first quantum circuit at one time to complete the scheduling processing of a plurality of quantum computing tasks at one time, it is possible to improve the utilization rate of computing resources of quantum chips as a whole, improve the quantum computing efficiency tasks being scheduled, and jointly improve the computational quantum computing efficiency.

Another embodiment of the present disclosure provides a storage medium in which a computer program is stored, wherein the computer program is set to execute the steps of any one of the above method embodiments at runtime.

Specifically, in the present embodiment, the storage medium may be set to store a computer program for performing the following steps:

S21, obtaining the current topology of the quantum chip;
S22, obtaining a plurality of quantum computing tasks, wherein: the sum of the number of qubits required by each quantum computing task is less than or equal to the number of qubits contained in the current topology;
S23, processing the quantum circuit corresponding to each quantum computing task as one first quantum circuit, wherein the first quantity circuit is an executable quantum circuit that can be executed on the quantum chip;
S24, sending the first quantum circuit to the quantum computer hardware to realize the calculation of each quantum computing task, and obtaining the scheduling result of each quantum computing task according to the computing result.

Specifically, in the present embodiment, the above storage media may include, but are not limited to: U disk, read-only memory (ROM), random access memory (RAM), portable hard disk, disk or optical disc and other media that can store computer programs.

Another embodiment of the present disclosure provides an electronic device comprising a memory and a processor, the memory is stored with a computer program therein, and the processor is set to run the computer program to execute the steps of any one of the above method embodiments.

Specifically, the above electronic device may further comprise a transmission device and an input-output device, wherein the transmission device is connected to the above processor, and the input-output device is connected to the above processor.

Specifically, in the present embodiment, the above processor may be set to perform the following steps by a computer program:

S21, obtaining the current topology of the quantum chip;
S22, obtaining a plurality of quantum computing tasks, wherein: the sum of the number of qubits required by each quantum computing task is less than or equal to the number of qubits contained in the current topology;
S23, processing the quantum circuit corresponding to each quantum computing task as one first quantum circuit, wherein the first quantity circuit is an executable quantum circuit that can be executed on the quantum chip;

S24, sending the first quantum circuit to the quantum computer hardware to realize the calculation of each quantum computing task, and obtaining the scheduling result of each quantum computing task according to the computing result.

Another embodiment of the present disclosure provides a quantum computer operating system, and the quantum computer operating system implements the scheduling of the quantum computing tasks according to the quantum computing task computing method of any one of the above method embodiments.

Another embodiment of the present disclosure provides a quantum computer, and the quantum computer comprises the quantum computer operating system described in the above embodiment.

The present disclosed embodiment also provides a quantum computing task computing method, and the method may be applied to an electronic devices, such as computer terminals, such as ordinary computers, quantum computers, etc.

It will be described in detail below by taking running on a computer terminal as an example.

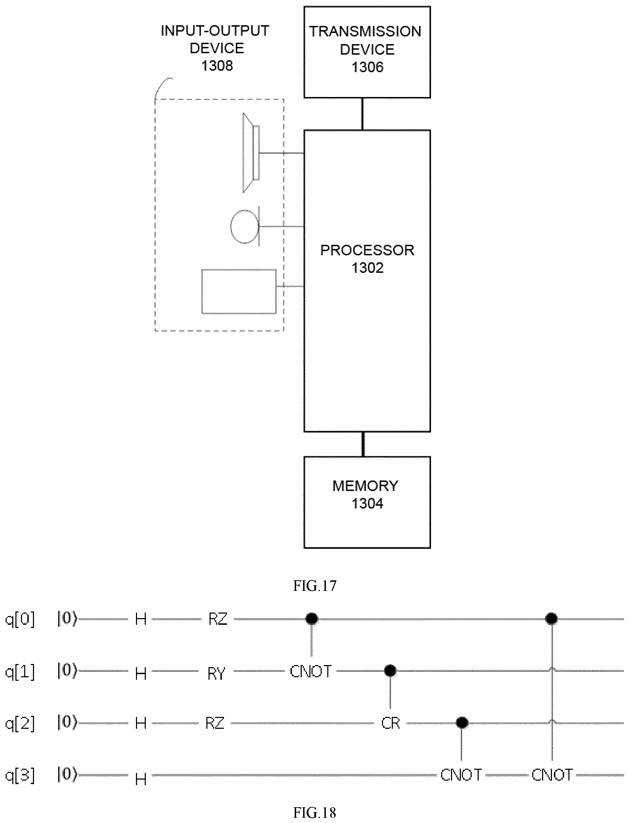

FIG. 17 is a structural block diagram of hardware of a computer terminal of a quantum computing task computing method provided by an embodiment of the present disclosure.

As shown in FIG. 17, the computer terminal may include one or more (only one is shown in FIG. 17) processors 1302 (the processors 1302 may include, but are not limited to, a processing device such as a microprocessor MCU or a programmable logic device FPGA) and a memory 1304 for storing data. Optionally, the above computer terminal may further include a transmission device 1306 and an input-output device 1308 for a communication function. Those skilled in the art can understand that the structure shown in FIG. 17 is only schematic, and does not limit the structure of the computer terminal. For example, the computer terminal may also include more or fewer components than shown in FIG. 17, or have a different configuration than shown in FIG. 17.

The memory 1304 may be used to store a software program as well as a module for application software, such as program instructions/modules corresponding to the quantum computing task scheduling method in embodiments of the present disclosure. The processor 1302 executes various functional applications as well as data processing, i.e., implements the above-described method, by running the software program as well as the module stored in the memory 1304. The memory 1304 may include a high-speed random memory, and may also include a non-volatile memory, such as one or more magnetic storage devices, flash memory, or other non-volatile solid-state memory. In some examples, the memory 1304 may further include memories set remotely relative to the processor 1302, and these remote memories may be connected to the computer terminal via a network. An example of the network includes, but is not limited to, the Internet, an enterprise intranet, a local area network, a mobile communication network, and combinations thereof.

The transmission device 1306 is used to receive or send data via a network. A specific example of the above network may include a wireless network provided by a communications provider of a computer terminal 1330. In one example, the transmission device 1306 includes a Network Interface Controller (NIC) that may be connected to other network devices via a base station so that it may communicate with the Internet. In one example, the transmission device 1306 may be a Radio Frequency (RF) module for communicating wirelessly with the Internet.

It should be noted that the quantum program referred to in the embodiment of the present disclosure is a program written in a classical language characterizing qubits and their evolution, wherein qubits, quantum logic gates, etc. related to quantum computing are represented by corresponding classical codes.

The quantum circuit, as an embodiment of a quantum program, is also known as a quantum logic circuit, is the most commonly used general-purpose quantum computation model, represents a circuit that operates on a qubit in an abstract concept, consists of a qubit, a circuit (a timeline), and a variety of quantum logic gates, and is often required to read out the results of the final quantum measurement operation. A quantum circuit can be represented by a sequence of quantum logic gates arranged in a certain execution time sequence.

Specifically, a quantum program is, for example:

```
QCircuit cir;
cir<<H(q[0])<<H(q[1])<<H(q[2])<<H(q[3])<<RZ(q[0],PI/2)<<RY(q[1],PI/4)
<<RZ(q[2],PI/4)<<CNOT(q[0],q[1])<<CR(q[1],q[2],PI/3)<<CNOT(q[2],q[3])<<CNOT(q[0 ],q[3]).
```

The corresponding quantum line (denoted as 1# quantum line), can be expressed as:

```
q[0]:H(q[0]), RZ(q[0], PI / 2)
q[1]: H(q[1]), RY(q[1], PI / 4), CNOT(q[0], q[1])
q[2]: H(q[2]), RZ(q[2], -PI / 4), CR(q[1], q[2], PI/3)
q[3]: H(q[3]), CNOT(q[2], q[3]), CNOT(q[0], q[3])
```

Wherein, q[0], q[1], q[2], q[3] refers to qubits from 0 to 3, which can also be denoted as $q_0$, $q_1$, $q_2$, $q_3$.

As a more visual way of presentation, the quantum circuit diagram corresponding to the above quantum logic gate sequence is shown in FIG. 18.

Unlike a conventional circuit where metal wires are connected to transmit a voltage or current signal, in the quantum circuit, the circuit can be viewed as connected by time, i.e., the state of the qubit evolves naturally over time following the instructions of the Hamiltonian operator, until it encounters a logic gate and is operated.

A quantum program as a whole corresponds to a total quantum circuit. The quantum program in this disclosure refers to the total quantum circuit, wherein the total number of qubits in the total quantum circuit is the same as the total number of qubits in the quantum program. It can be understood that a quantum program can be composed of a quantum circuit, measurement operations for the qubits in the quantum circuit, a register for storing the measurement results, and a control flow node (jump instruction). A quantum circuit can contain tens, hundreds or even thousands of quantum logic gate operations. The process of executing a quantum program is the process of executing all quantum logic gates according to a certain time sequence. It should be noted that time sequence is the time sequence in which a single quantum logic gate is executed.

It should be noted that in classical computing, the most basic unit is a bit, and the most basic control mode is a logic gate. The purpose of controlling the circuit can be achieved through the combination of logic gates. Similarly, the way to handle qubits is quantum logic gates. Quantum states can be evolved using quantum logic gates. Quantum logic gates are the basis of quantum circuits, and include single-bit quantum logic gates (or single quantum logic gates, simply called "single-door"), such as Hadamard gate (H gate, Hadamard gate), Pauli-X gate (X gate), Pauli-Y gate (Y gate) , Pauli-Z gate (Z gate), RX gate, RY gate, RZ gate, etc.; double-bit quantum logic gates (or double-quantum logic gates, simply called "double-door"), such as CNOT gate, CR gate, SWAP gate, iSWAP gate, etc.; multi-bit quantum logic gates (or multi-quantum logic gates, simply called "multi-door"), such as Toffoli gate, etc. Quantum logic gates are generally represented by unitary matrices, and unitary matrices are not only in the form of matrices, but also a kind of operation and transformation. Generally, the function of a quantum logic gate on a quantum state is calculated by multiplying the left side of the unitary matrix by the matrix corresponding to the right vector of the quantum state.

For example, the matrix corresponding to the quantum state right vector |0> is $\begin{pmatrix} 1 \\ 0 \end{pmatrix}$, and the matrix corresponding to the quantum state right vector |1> is $\begin{pmatrix} 0 \\ 1 \end{pmatrix}$.

A quantum state is the logical state of a qubit. In a quantum algorithm (or quantum program), the quantum state of a set of qubits contained in a quantum circuit is represented in binary. For example, a set of qubits is $q_0$, $q_1$, $q_2$, representing the 0th, 1st, and 2nd qubits and sorted from high to low in binary representation as $q_2q_1q_0$. The quantum states corresponding to this set of qubits have a total of 2 qubits to the power of the total, that is, 8 eigenstates (determined states): |000>, |001>, |010>, |011>, |100>, |101>, |110>, |111>. The bit of each quantum state corresponds to the qubit, such as |001> state, 001 corresponds to $q_2q_1q_0$ from high to low, and |> is the Dirac symbol. For a quantum circuit containing N qubits $q_0$, $q_1$,..., $q_n$,..., $q_{N-1}$, the order of the bits of quantum states represented in binary is $q_{N-1}q_{N-2}$ ..., $q_1q_0$.

Taking a single qubit for example, the logic state $\psi$ of the single qubit may be in the state of |0>, the state of |1>, and the superposition state (uncertain state) of the |0> state and the |1> state, and can be specifically expressed as $\psi = a|0> + b|1>$, wherein a and b are complex numbers representing the amplitude (probability amplitude) of the quantum state, the square of the amplitude represents the probability, $a^2$ and $b^2$ represent the probabilities that the logic states are the |0> state and the |1> state, respectively, and $a^2 + b^2 = 1$. In short, the quantum state is a superposition state of various eigenstates, and when the probability of other states is 0, it is in a uniquely determined eigenstate.

The quantum chip is a processor that performs quantum computation in a quantum computer, and the qubit structure contained in the quantum chip is the processing unit of the processor. Limited by the hardware manufacturing technology of the quantum chip, the increase of the number and utilization of qubit structure contained in the quantum chip is one of the factors restricting the computing power of quantum computing. Therefore, it is necessary to schedule qubits on the quantum chip reasonably and adequately when scheduling the quantum computing task.

It should be noted that in procedure of quantum computing, the physical signal sent to the quantum chip is used to drive the qubit to work to implement quantum computing, and the physical hardware device used to generate the physical signal needs to match the qubits contained in the quantum chip. The quantum chip and the physical hardware devices can only be controlled and driven once at any time. At present, in the procedure of computing the quantum computing tasks, usually, any quantum computing task is taken as a unit, and the above physical hardware devices are scheduled sequentially to implement the computation of the quantum computing tasks, that is, when executing computation of the quantum computing tasks, it is only necessary to consider the waiting time of the quantum computing tasks submitted by a user and the releasing time of completely idle quantum chips (that is, the time to wait for the occupied qubits on the quantum chip to be fully released), and to schedule the quantum computing tasks in a task queue to the quantum chips one by one in the form of submitting first and running first so as to perform quantum computing. The method not only wastes the computing resources of the quantum chip, but also negatively influences the quantum computing efficiency.

The following further describes the quantum computing task computing method provided by an embodiment of the present disclosure in conjunction with the accompanying drawings.

For the sake of distinction, in the following introduction, an object operated by such as a quantum program, a quantum logic gate in the quantum circuit, etc. is called a qubit, and the qubit structure in the quantum chip is called a physical bit.

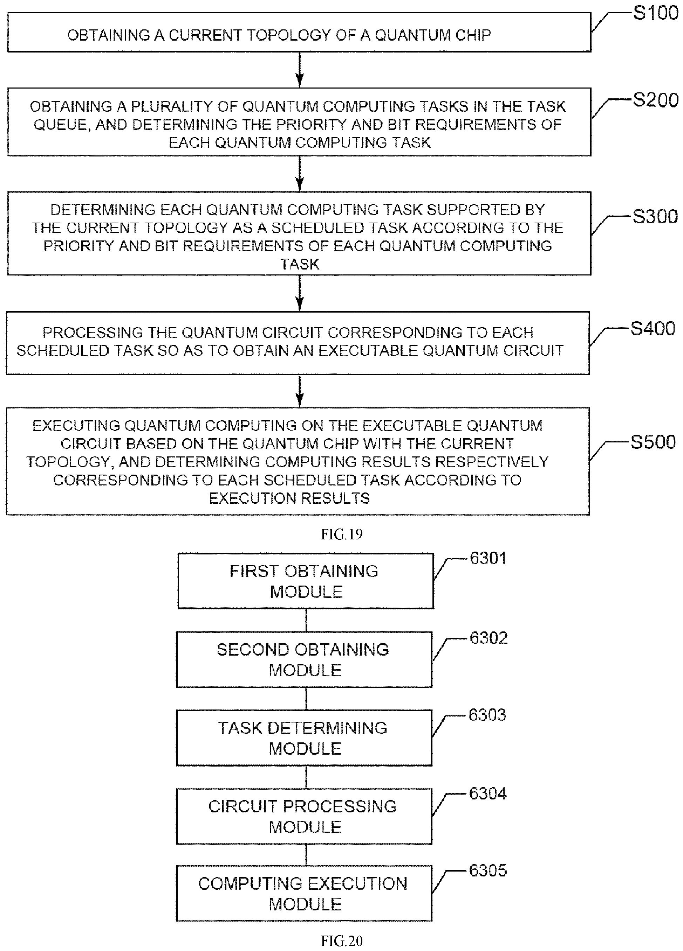

FIG. 19 is a schematic illustration of a quantum computing task computing method provided by an embodiment of the present disclosure.

Referring to FIG. 19, the quantum computing task computing method provided by the embodiment of the present disclosure comprises steps S100 to S500, wherein:

S100, obtaining a current topology of a quantum chip.

The topology of the quantum chip reflects the spatial characteristics of qubits on the quantum chip, and the spatial characteristics include the number, location, and connection relationship of the qubits contained in the quantum chip and determine availability of the quantum chip.

The current topology of the quantum chip contains information about the physical bits currently available on the quantum chip and specifically includes the number of currently available physical bits, their location and connections, and the information can be determined based on the usage of physical bits on the quantum chip. The usage of the physical bits on the quantum chip exemplary includes: the occupied condition of the physical bits, the fidelity of the physical bits determining whether they can be used, etc.

S200, obtaining a plurality of quantum computing tasks in the task queue, and determining the priority and bit requirements of each quantum computing task.

In the field of quantum computing, the quantum computing task is usually represented by the quantum circuit. Qubits contained in the quantum circuit corresponding to the quantum computing task is bits required for the quantum computing task, and represents the physical bit required for the quantum chip to execute the quantum computation task. The priority of quantum computing tasks is the order in which various quantum computing tasks in the task queue are executed.

Generally, after receiving a plurality of quantum computing tasks submitted by a user, the quantum computing operating system puts them into a task queue to wait for scheduling to executing quantum computing. Limited by the physical factors such as the state of physical bits that cannot be copied and the physical bits with short coherence time, it is impossible to switch between the plurality of quantum computing tasks. Therefore, it is necessary to sequentially execute various quantum computing tasks in a certain order, that is, according to the priority of the quantum computing tasks.

Executing a quantum circuit corresponding to the quantum computing task on the quantum chip includes the following situations: specifying a specific physical bit on the quantum chip to execute the corresponding quantum circuit, and not specifying the physical bit on the quantum chip but allocating the physical bit by the system according to the usage of the physical bits on the chip to execute the corresponding quantum circuit. Based on this, said "determining the priority of each quantum computing task" in step S200 may include the following scenarios.

In some embodiments of the present disclosure, said "determining the priority of each quantum computing task" in step S200 may include a step S201 and a step S202:

S201, obtaining types of various quantum computing tasks, the types including at least one of unspecified bits and specified bits; S202, if the types are all unspecified bits, determining priority of each quantum computing task according to a high response ratio priority principle.

It should be noted that the high response ratio priority principle refers to a principle of prioritizing tasks based on Highest Response Ratio Next (HRRN) scheduling algorithm, and the priority of quantum computing tasks in the task queue increases as the waiting time increases, wherein:

$$\text{response ratio} = \frac{\text{response time}}{\text{task executing time}} = \frac{\text{waiting time+task executing time}}{\text{task executing time}}$$

In other embodiments of the present disclosure, said "determining the priority of each quantum computing task" in step S200 further includes, in addition to the steps S201 to S202, a step S203:

S203, if the types are all unspecified bits, determining priority of each quantum computing task according to a first-come first-served principle.

It should be noted that the first-come first-served principle refers to a principle of prioritizing tasks based on First Come First Serve (FCFS) scheduling algorithm. In order to avoid the intersection and mutual influence of the bits specified by the quantum circuit corresponding to the quantum computing task, prioritizing quantum computing tasks according to the order in which they are submitted to the task queue can avoid mutual influence when quantum computing tasks are executed.

Since there is a possibility that the plurality of quantum computing tasks submitted by the user to the task queue in one part is the type of specified bits and in the other part is the type of the unspecified bits, in order to clarify the relative priority between the two parts, in some other embodiments of the present disclosure, said "determining the priority of each quantum computing task" in step S200 further includes, in addition to the steps S201 to S203, a step S204: S203, if the types include the type of specified bits and the type of unspecified bits, the quantum computing tasks corresponding to the type of specified bits having a higher priority than the quantum computing tasks corresponding to the type of unspecified bis.

As an embodiment of step S200, Steps S201 to S204 prioritize quantum computing tasks in the task queue according to different principles by first obtaining the types of various quantum computing tasks in the task queue, and then according to whether the types of various quantum computing tasks are all types of unspecified bis, or all types of specified bits, or there are types of specified bits and types of unspecified bis,

S300, determining each quantum computing task supported by the current topology as a scheduled task according to the priority and bit requirements of each quantum computing task.

This step determines the quantum computing tasks that need to be scheduled from the task queue to perform quantum computing for the current topology, that is, determines the best combination of quantum computing tasks for this scheduling based on the current topology of the quantum chips according to the priority and bit requirements of each quantum computing task in the task queue, so as to implement parallel computing of multiple quantum computing tasks on the same quantum chip when the bit requirements corresponding to the multiple quantum computing tasks are different, thereby maximizing the use of the computing resources of the quantum chip and improving the quantum computing efficiency.

Exemplary, the task groups that the current topology can support may be determined first, wherein each task group includes at least one of the quantum computing tasks, and then the priority of each task group is determined according to the priority of each quantum computing task contained in each task group, and finally the quantum computing task contained in the task group with the highest priority is determined as a scheduled task.

In some embodiments of the present disclosure, the step S300 can also determine whether each quantum computing task is a scheduled task supported by the current topology by traversing multiple quantum computing tasks in the task queue. The step S300 specifically includes steps S301 to S304, wherein:

S301, obtaining the quantum computing task with the highest priority in the task queue; S302, according to the bit requirements of the currently obtained quantum computing tasks, determining whether the current topology satisfies the corresponding bit requirements, and the remaining bits in the current topology, wherein the remaining bits refer to the remaining physical bits in the current topology after satisfying the corresponding bit requirements; S303, if so, determining currently obtained quantum computing task as the scheduled task, and updating the current topology with the remaining bits; if not, the currently obtained quantum computing task is not determined to be a scheduled task; S304, obtaining the quantum computing task with the next priority in the task queue and returning to the step of determining whether the current topology satisfies the corresponding bit requirements and remaining physical bits in the current topology according to the bit requirements on the currently obtained quantum computing task.

Steps S301 to S304 obtain various quantum computing tasks in the task queue in order of priority from highest to lowest. When the current topology can support the execution of the currently obtained quantum computing task (that is, meeting the bit requirements of the currently obtained quantum computing task), determining the currently obtained quantum computing task as the scheduled task, locking the physical bits in the current topology which supports the currently obtained quantum computing task to execute quantum computing, then updating the current topology with the remaining physical bits, then continuing to obtain the next priority quantum computing task, and determining whether the current topology can support the currently obtained quantum computing task to execute quantum computing, so as to screen out the quantum computing tasks in the task queue that are suitable for executing quantum computing on the current topology as the scheduled tasks. It should be emphasized that whether the scheduled task includes one quantum computation task, two quantum computation tasks, or multiple quantum computation tasks depends entirely on how many quantum computing tasks can be supported by the current topology to execute quantum computing.

S400, processing the quantum circuit corresponding to each scheduled task so as to obtain an executable quantum circuit, wherein the executable quantum circuit is a quantum circuit consisting of quantum logic gates that can be executed directly on the quantum chip.

As an implementation of the step S400, it is possible to directly combine the quantum circuits corresponding to various scheduled tasks so as to obtain an executable quantum circuit, or optimize the quantum circuits corresponding to each scheduled task first and then combine them. It is possible to meet two conditions if the quantum circuits can be executed directly on the current topology of the quantum chip: one is that the number of the physical bits in the current topology meets the bit requirements of the quantum circuit, the other is that the quantum logic gate contained in the quantum circuit can be implemented on the physical bits of the quantum chip, which depends on the relationship between physical bits in current topology. Therefore, after screening out the quantum computing tasks in the task queue that are suitable for executing quantum computing on the current topology as the scheduled task, the quantum circuits corresponding to the scheduled task can also be processed according to different situations.

As an embodiment, the optimization includes simplification optimization of the quantum circuit and decomposition optimization of the quantum logic gate. Exemplary, the simplification optimization of the quantum circuit includes eliminate the redundant quantum logic gate in the quantum circuit; the decomposition optimization of quantum logic gates includes, but is not limited to, decomposition of a multi-quantum logic gate, a single-quantum logic gate, a two-quantum logic gate included in a quantum circuit. As an embodiment, the combination processing may be the sequential splicing combination processing of the quantum circuits corresponding to various scheduled tasks, that is, the quantum circuits corresponding to various scheduled tasks are sequentially connected together as a whole to form a quantum circuit.

In some embodiments of the present disclosure, said step of "combining the quantum circuits corresponding to various scheduled tasks so as to obtain an executable quantum circuit" specifically comprises the following steps S401 to S403:

S401, determining mapping bits in the current topology corresponding to the qubits contained in each quantum circuit according to the quantum circuit corresponding to each scheduled task; S402, updating the qubits in each quantum circuit with the mapping bits to obtain the corresponding updated quantum circuit; S403, integrating each updated quantum circuit according to the execution time sequence of the quantum logic gate to obtain the executable quantum circuit.

It can be understood that by matching the qubits contained according to the quantum circuit corresponding to each scheduled task with the physical bits contained in the current topology of the quantum chip, the physical bits corresponding to qubits contained in the quantum circuit are determined to be the mapping bits, so as to allocate the computing resources of the current topology to match each scheduled task.

S500, executing quantum computing on the executable quantum circuit based on the quantum chip with the current topology, and determining computing results respectively corresponding to each scheduled task according to execution results.

In an embodiment of the present disclosure, said step of "executing quantum computing on the executable quantum circuit" in the step S500, specifically comprises:

S501, compiling the executable quantum circuit to obtain corresponding waveform instructions; S502, sending the signal corresponding to the waveform instructions to the quantum chip with the current topology to achieve quantum computing.

It can be understood that the physical bits on the quantum chip work according to the physical signal received, and the physical signal sent to the quantum chip corresponds to a waveform instruction. In steps S501 to S502, by compiling the executable quantum circuit to obtain corresponding waveform instructions and then sending the waveform instructions the physical hardware device, the physical hardware device sends a corresponding signal to the quantum chip of the current topology according to the received waveform instruction so as to drive the physical bits on the quantum chip to work, therefore implementing quantum computing.

In another embodiment, said step of "determining computing results respectively corresponding to each scheduled task according to execution results" in the step S500, specifically comprises:

S503, obtaining a quantum state representing the execution result, wherein the quantum state of the execution result is the quantum state of all the mapping bits of the executable quantum circuit, and can be represented by the eigenstates of the mapping bits and the amplitude corresponding to each of the eigenstates; S504, determining the sub-quantum state corresponding to the mapping bits corresponding to each scheduled task in the quantum state, that is, the state of all mapping bits corresponding to each scheduled task can be expressed by the eigenstates and corresponding amplitudes of the mapping bits corresponding to each scheduled task; S505, taking the probability corresponding to each sub-quantum state as the computing result corresponding to the scheduled task.

It should be noted that the quantum computation executing result needs to be obtained by statistical measurement, and what is obtained by statistical measurement is the probability that the physical bit is in the eigenstate, and the probability is the square of the amplitude.

As an implementation, said step of "obtaining a quantum state representing the execution result" in the step S503 comprises steps S5031 to S5032:

S5031, determining the eigenstate of all mapping bits corresponding to each quantum circuit; S5032, obtaining the measured probability corresponding to each eigenstate.

Compared with the prior art, the quantum computing task computing method provided by embodiments of the present disclosure facilitates the realization of synchronous parallel computing of multiple quantum computing tasks on the current topology. In connection with the embodiments of the present disclosure, it should be emphasized that, the embodiments of the present disclosure determine the best combination of the quantum computing tasks scheduled this time based on the current topology of the quantum chip according to the priority and bit requirements of each quantum computing task in the task queue, so as to make full use of the computing resources of the current topology to implement parallel computing of multiple quantum computing tasks on the same quantum chip when the corresponding bit requirements of multiple quantum computing tasks are different, therefore maximizing the use of the computing resources of the quantum chip and improve the quantum computing efficiency.

FIG. 20 is a schematic structural diagram of a quantum computing task computing device provided by an embodiment of the present disclosure.

See FIG. 20, the embodiment of the present disclosure provides a quantum computing task computing device corresponding to the above quantum computing task computing method, and the device comprises:

a first obtaining module 6301, configured for obtaining the current topology of the quantum chip;
a second obtaining module 6302, configured for obtaining multiple quantum computing tasks in the task queue, and determining the priority and bit requirements of each quantum computing task
a task determining module 6303, configured for determining each quantum computing task supported by the current topology as a scheduled task according to the priority and bit requirements of each quantum computing task;
a circuit processing module 6304, configured for processing the quantum circuit corresponding to each scheduled task to obtain an executable quantum circuit;
an computing execution module 6305, configured for executing quantum computing on the executable quantum circuit based on the quantum chip with the current topology, and determining computing results respectively corresponding to each scheduled task according to execution results.

Corresponding to the quantum computing task computing method provided by the embodiment of the present disclosure, the quantum computing task computing device provided by the embodiment of the present disclosure, compared with the prior art, facilitates the realization of synchronous parallel computing of multiple quantum computing tasks on the current topology, therefore maximizing the use of the computing resources of the quantum chip and improve the quantum computing efficiency.

The embodiment of the present disclosure further provides a storage medium in which the computer program is stored, wherein the computer program is set to execute steps of any one of the above methods at runtime.

Specifically, in the present embodiment, the storage medium may be set to store a computer program for performing the following steps:

S 100, obtaining the current topology of the quantum chip;
S200, obtaining multiple quantum computing tasks in the task queue, and determining the priority and bit requirements of each quantum computing task;
S300, determining each quantum computing task supported by the current topology as a scheduled task according to the priority and bit requirements of each quantum computing task;;
S400, processing the quantum circuit corresponding to each scheduled task to obtain an executable quantum circuit;
S500, executing quantum computing on the executable quantum circuit based on the quantum chip with the current topology, and determining computing results respectively corresponding to each scheduled task according to execution results.

Specifically, in the present embodiment, the above storage media may include, but are not limited to: U disk, read-only memory (ROM), random access memory (RAM), portable hard disk, disk or optical disc and other media that can store computer programs.

The embodiment of the present disclosure further provides an electronic device comprising a memory and a processor, the memory is stored with a computer program therein, and the processor is set to run the computer program to execute steps of any one of the above methods at runtime.

Specifically, the above electronic device may further comprise a transmission device and an input-output device, wherein the transmission device is connected to the above processor, and the input-output device is connected to the above processor.

Specifically, in the present embodiment, the above processor may be set to perform the following steps by a computer program:

S 100, obtaining the current topology of the quantum chip;
S200, obtaining multiple quantum computing tasks in the task queue, and determining the priority and bit requirements of each quantum computing task;

S300, determining each quantum computing task supported by the current topology as a scheduled task according to the priority and bit requirements of each quantum computing task;;

S400, processing the quantum circuit corresponding to each scheduled task to obtain an executable quantum circuit;

S500, executing quantum computing on the executable quantum circuit based on the quantum chip with the current topology, and determining computing results respectively corresponding to each scheduled task according to execution results.

The embodiment of the present disclosure further provides a quantum computer operating system, and the quantum computer operating system implements the quantum computing task computing according to any one of the above method embodiments provided by embodiments of the present disclosure.

The embodiment of the present disclosure further provides a quantum computer comprising the above quantum computer operating system.

Compared with the prior art, embodiments of the present disclosure facilitates the realization of synchronous parallel computing of multiple quantum computing tasks on the current topology by obtaining the current topology of the quantum chip, obtaining multiple quantum computing tasks in the task queue, and determining the priority and bit requirements of each quantum computing task; then, determining each quantum computing task supported by the current topology as a scheduling task according to the priority and bit requirements of each quantum computing task; then processing the quantum circuit corresponding to each scheduling task to obtain an executable quantum circuit; finally, executing quantum computing on the executable quantum circuit based on the quantum chip with the current topology, and determining computing results respectively corresponding to each scheduled task according to execution results. It should be emphasized that, the present disclosure determines the best combination of the quantum computing tasks scheduled this time based on the current topology of the quantum chip according to the priority and bit requirements of each quantum computing task in the task queue, so as to make full use of the computing resources of the current topology to implement parallel computing of multiple quantum computing tasks on the same quantum chip when the corresponding bit requirements of multiple quantum computing tasks are different, therefore maximizing the use of the computing resources of the quantum chip and improve the efficiency of quantum computing.

It is to be understood that reference throughout this specification to "some embodiments", "one embodiment", or "an implementation" means that a particular feature, structure, or characteristic described in connection with the embodiments is included in at least one embodiment of the disclosure. Thus, appearances of the phrases "in some embodiments", "in one embodiment", or "in an implementation" in various places throughout the specification are not necessarily referring to the same embodiment. Furthermore, the particular features, structures, or characteristics may be combined in any suitable manner in one or more embodiments.

It should be noted that, in this document, the terms "comprise", "contain", or any other variation thereof, are intended to cover a non-exclusive inclusion, such that a process, method, article, or apparatus that comprises a list of elements does not include only those elements but may include other elements not expressly listed, or elements inherent to such process, method, article, or apparatus. Without further restrictions, an element qualified by the statement "including a..." does not exclude the existence of another identical element in the process, method, article, or apparatus comprising the element.

In several embodiments provided in the present disclosure, it should be understood that the disclosed methods, apparatuses, and systems, may be implemented by other means. The embodiments described above are only illustrative, for example, the division of the module, the unit, is only a logical function division, the actual implementation may have another division method, such as: plurality of units or components may be combined, or can be integrated into another system, or some features can be ignored, or not performed. Further, the components shown or discussed are coupled to each other, or directly coupled, or connected by some interfaces, indirect coupling or communication connections of devices or units, may be electrical, mechanical, or otherwise.

The elements described above as separate parts may be, or may not be physically separate, and the components shown as units may or may not be physical units; they can be located in one place or distributed across multiple network units; some or all of the units may be selected according to actual needs to achieve the purpose of the present embodiment.

Further, each functional unit in each embodiment of the present disclosure may be fully integrated in a processing unit, or each unit may be individually used as a unit, or two or more units may be integrated in a unit; the above integrated unit can be implemented in the form of hardware or in the form of hardware plus software functional unit.

Those of ordinary skill in the art may understand: all or part of the steps to implement the embodiment of the above method may be completed by the hardware associated with the program instruction, the aforementioned program may be stored in a computer-readable storage medium, the program when executed, perform steps comprising the above method embodiment; the aforementioned storage media includes: removable storage devices, read only memory (ROM), disks or optical discs and other media that can store program code.

Alternatively, the above-mentioned integrated unit of the present disclosure may also be stored in a computer-readable storage medium if implemented in the form of a software functional module and sold or used as a stand-alone product. Based on this understanding, the technical solution of the embodiment of the present disclosure in essence or part of the prior art contribution may be embodied in the form of a software product, the computer software product is stored in a storage medium and includes certain instructions to enable a device (which may be a computer, server, etc.) to implement a resource change to perform all or part of the methods described in various embodiments of the present disclosure. The aforementioned storage media include: removable storage devices, ROM, disks or optical discs and other media that can store program code.

The above embodiments shown in accordance with the schemas detail the structure, characteristics, and effects of the present disclosure, and the above is only a preferred embodiment of the present disclosure, but the present disclosure does not limit the scope of embodiment as shown in the accompanying drawings. Any alteration made in accordance with the conception of the present disclosure, or modified to an equivalent embodiment of the change, shall be within the scope of protection of the present disclosure if it is not beyond the spirit covered by the description and accompanying drawings.

**Claims**

1.  A quantum computer operating system, **characterized by** comprising:

    a quantum program compiling-optimizing service module, configured for implementing the following processes:

       obtaining a quantum program to be executed,
       obtaining a topology of a qubit in a quantum chip of a second quantum computing hardware device,
       compiling the quantum program into quantum computing tasks based on the topology; and

    a communication module, configured for sending the quantum computing tasks to the second quantum computing hardware device for quantum computing.

2.  The quantum computer operating system of claim 1, **characterized by** further comprising:
    a qubit managing service module, configured for implementing the following processes:

       receiving the quantum computing tasks from the quantum program compiling-optimizing service module,
       obtaining a current topology of an available qubit in the quantum chip of the second quantum computing hardware device, and
       selecting a quantum computing task to be processed from the quantum computing tasks based on the current topology, wherein qubits required by the quantum computing task to be processed match the current topology; wherein the communication module sends the quantum computing task to be processed to the second quantum computing hardware device.

3.  The quantum computer operating system of claim 2, **characterized in that** the number of the qubits required by the quantum computing task to be processed is less than or equal to the number of qubits in the current topology.

4.  The quantum computer operating system of any one of claims 1-3, **characterized in that** the topology is a current topology of an available qubit in the quantum chip of the second quantum computing hardware device, and the quantum program compiling-optimizing service module compiles the quantum program into the quantum computing tasks based on the current topology.

5.  The quantum computer operating system of claim 4, **characterized by** further comprising:
    a qubit managing service module, configured for obtaining a current topology of an available qubit in the quantum chip of the second quantum computing hardware device, and transmitting the current topology to the quantum program compiling-optimizing service module.

6.  The quantum computer operating system of any one of claims 1-5, **characterized in that** the quantum program is a program code in an intermediate language.

7.  The quantum computer operating system of any one of claims 1-6, **characterized in that** the quantum computing tasks comprise quantum circuits.

8. The quantum computer operating system of any one of claims 1-7, **characterized by** further comprising:
an automatic calibration service module, configured for automatically testing and calibrating the quantum chip.

9. The quantum computer operating system of any one of claims 1-8, **characterized by** further comprising:
a quantum computing task scheduling-managing service module configured for determining a quantum computing task to be assigned according to priorities of the quantum computing tasks, wherein the priorities are determined based on waiting time and executing time of the quantum computing tasks.

10. A quantum computer, comprising:

a first quantum computing hardware device, wherein the quantum computer operating system of any one of claims 1-9 is provided on the first quantum computing hardware device; and
a second quantum computing hardware device being in communication with the first quantum computing hardware device and comprising a quantum chip,
wherein, the communication module of the quantum computer operating system sends the quantum computing tasks to the second quantum computing hardware device for executing quantum computing.

11. A quantum computer readable storage medium having one or more quantum computer executable instructions stored thereon, wherein the quantum computer executable instructions, when being executed by a quantum computer, implements the quantum computer operating system of any one of claims 1 to 9.

FIG.1

FIG.2

QUANTUM PROGRAM
COMPILING-OPTIMIZING
SERVICE MODULE 102

QUBIT MANAGING
SERVICE MODULE 106

COMMUNICATION
MODULE 104

QUANTUM COMPUTER
OPERATING SYSTEM 100

FIG.3

QUANTUM PROGRAM
COMPILING-OPTIMIZING
SERVICE MODULE 102

AUTOMATIC CALIBRATION
SERVICE MODULE 108

QUANTUM
COMPUTING TASK
SCHEDULING-MANAGING
SERVICE MODULE 110

QUBIT MANAGING
SERVICE MODULE 106

COMMUNICATION
MODULE 104

QUANTUM COMPUTER
OPERATING SYSTEM 100

FIG.4

QUBIT MANAGING
SERVICE MODULE 1001

QUANTUM
COMPUTING TASK
SCHEDULING-MANAGING
SERVICE MODULE 1002

COMPILATION-OPTIMIZING
SERVICE MODULE 1003

COMMUNICATION
MODULE 1004

FIG.5

q1 ———————— H ——————————————————

q2 —————————— U ————————————————

q3 ———————————————— NOT ——————————

q4 ——————————————————————— NOT ———

FIG.6.1

FIG.6.2

FIG.6.3

INPUT-OUTPUT
DEVICE 1108

TRANSMISSION
DEVICE
1106

PROCESSOR
1002

MEMORY
1104

FIG.7

OBTAINING THE CURRENT TOPOLOGY OF THE QUANTUM CHIP ⌐S11

FOR A QUANTUM COMPUTING TASK REPRESENTED BY A QUANTUM CIRCUIT RECEIVED UP TO THE CURRENT MOMENT, OBTAINING, ACCORDING TO THE NUMBER OF QUBITS CONTAINED IN THE QUANTUM CIRCUIT, A QUANTUM CIRCUIT MATCHING THE CURRENT TOPOLOGY OF THE QUANTUM CHIP AS A QUANTUM CIRCUIT TO BE PROCESSED ⌐S12

COMPILING EACH QUANTUM CIRCUIT TO BE PROCESSED TO OBTAIN AN EXECUTABLE QUANTUM CIRCUIT THAT CAN BE EXECUTED ON THE QUANTUM CHIP ⌐S13

DETERMINING THE EXECUTING TIME OF THE EXECUTABLE QUANTUM CIRCUIT ACCORDING TO THE TIME SEQUENCE OF THE EXECUTABLE QUANTUM CIRCUIT ⌐S14

DETERMINING THE QUANTUM COMPUTING TASK TO BE SCHEDULED ACCORDING TO THE PRIORITY OF EACH EXECUTABLE QUANTUM CIRCUIT, WHEREIN: THE PRIORITY IS DETERMINED ACCORDING TO THE EXECUTING TIME AND THE WAITING TIME OF THE CORRESPONDING QUANTUM COMPUTING TASK ⌐S15

FIG.8

q1 ————— H —————————————————

q2 ————————— U —————————————

q3 ——————————————— NOT ————————

q4 ————————————————————— NOT ————

FIG.9.1

FIG.9.2

FIG.9.3

q0 ——————— H ——— RX ———————————————————

q1 ——————— H ——— X ——— H ———————————————

q2 ————— RY ———————————————— H ———————————

q3 ——————————— NOT ——— NOT ——————— RZ ————

q4 ————— H ——————————————— H ——— NOT ——— Y ——— RX ————

FIG.10.1

| | 1ST TIME SEQUENCE | 2ND TIME SEQUENCE | 3RD TIME SEQUENCE | 4TH TIME SEQUENCE | 5TH TIME SEQUENCE | 6TH TIME SEQUENCE |
|---|---|---|---|---|---|---|
| q_0 | H(q[0]) | RX(q[0]) | | | | |
| q_1 | H(q[1]) | X(q[1]) | H(q[1]) | CNOT(q[1] ,q[0]) | | |
| q_2 | RY(q[2]) | | CNOT(q[2] ,q[3]) | H(q[2]) | | |
| q_3 | | CNOT(q[4] ,q[3]) | CNOT(q[2] ,q[3]) | CNOT(q[3] ,q[4]) | RZ(q[3]) | |
| q_4 | H(q[4]) | CNOT(q[4] ,q[3]) | H(q[4]) | CNOT(q[3] ,q[4]) | Y(q[4]) | RX(q[4]) |

FIG.10.2

QUBIT MANAGING
SERVICE MODULE
5101

QUANTUM COMPUTING TASK
SCHEDULING-MANAGING
SERVICE MODULE
5102

COMPILATION-OPTIMIZING
SERVICE MODULE 5103

EXECUTING TIME
DETERMINING MODULE 5104

FIG.11

INPUT-OUTPUT
DEVICE
1208

TRANSMISSION
DEVICE
1206

PROCESSOR
1202

MEMORY
1204

FIG.12

| OBTAINING THE CURRENT TOPOLOGY OF THE QUANTUM CHIP | S21 |

| OBTAINING MULTIPLE QUANTUM COMPUTING TASKS | S22 |

| PROCESSING THE QUANTUM CIRCUIT CORRESPONDING TO EACH QUANTUM COMPUTING TASK AS ONE FIRST QUANTUM CIRCUIT, WHEREIN THE FIRST QUANTITY CIRCUIT IS AN EXECUTABLE QUANTUM CIRCUIT THAT CAN BE EXECUTED ON THE QUANTUM CHIPI | S23 |

| SENDING THE FIRST QUANTUM CIRCUIT TO THE QUANTUM COMPUTER HARDWARE TO REALIZE THE COMPUTATION OF EACH QUANTUM COMPUTING TASK, AND OBTAINING THE SCHEDULING RESULT OF EACH QUANTUM COMPUTING TASK ACCORDING TO THE COMPUTATION RESULT | S24 |

FIG.13

FIG.14.1

FIG.14.2

FIG.14.3

Q0 — H — CNOT

Q1 — H

Q2 - H

Q3 — H

Q4 — H

Q5 — CNOT

Q6 — H

Q7 — H

Q8 — CZ — H

FIG.15

```
┌─────────────────────┐
│  FIRST OBTAINING    │── 5201
│      MODULE         │
└─────────────────────┘
           │
┌─────────────────────┐
│  SECOND OBTAINING   │── 5202
│      MODULE         │
└─────────────────────┘
           │
┌─────────────────────┐
│  FIRST PROCESSING   │── 5203
│      MODULE         │
└─────────────────────┘
           │
┌─────────────────────┐
│  SECOND PROCESSING  │── 5204
│      MODULE         │
└─────────────────────┘
```

FIG.16

INPUT-OUTPUT
DEVICE
1308

TRANSMISSION
DEVICE
1306

PROCESSOR
1302

MEMORY
1304

FIG.17

q[0]  |0⟩————— H ————— RZ ——————————●————————————————————●———————

q[1]  |0⟩————— H ————— RY ————— CNOT ————●————————————————————————

q[2]  |0⟩————— H ————— RZ ————————————— CR ————●————————————————

q[3]  |0⟩————— H ——————————————————————————————— CNOT ——— CNOT ———

FIG.18

50

| OBTAINING A CURRENT TOPOLOGY OF A QUANTUM CHIP | S100 |

| OBTAINING A PLURALITY OF QUANTUM COMPUTING TASKS IN THE TASK QUEUE, AND DETERMINING THE PRIORITY AND BIT REQUIREMENTS OF EACH QUANTUM COMPUTING TASK | S200 |

| DETERMINING EACH QUANTUM COMPUTING TASK SUPPORTED BY THE CURRENT TOPOLOGY AS A SCHEDULED TASK ACCORDING TO THE PRIORITY AND BIT REQUIREMENTS OF EACH QUANTUM COMPUTING TASK | S300 |

| PROCESSING THE QUANTUM CIRCUIT CORRESPONDING TO EACH SCHEDULED TASK SO AS TO OBTAIN AN EXECUTABLE QUANTUM CIRCUIT | S400 |

| EXECUTING QUANTUM COMPUTING ON THE EXECUTABLE QUANTUM CIRCUIT BASED ON THE QUANTUM CHIP WITH THE CURRENT TOPOLOGY, AND DETERMINING COMPUTING RESULTS RESPECTIVELY CORRESPONDING TO EACH SCHEDULED TASK ACCORDING TO EXECUTION RESULTS | S500 |

FIG.19

| FIRST OBTAINING MODULE | 6301 |

| SECOND OBTAINING MODULE | 6302 |

| TASK DETERMINING MODULE | 6303 |

| CIRCUIT PROCESSING MODULE | 6304 |

| COMPUTING EXECUTION MODULE | 6305 |

FIG.20

## INTERNATIONAL SEARCH REPORT

| International application No. |
| --- |
| **PCT/CN2022/074798** |

**A.    CLASSIFICATION OF SUBJECT MATTER**

G06N 10/00(2022.01)i;  G06F 9/48(2006.01)i;  G06F 9/50(2006.01)i;  G06F 8/41(2018.01)i;  G06F 16/907(2019.01)i;  G06F 8/40(2018.01)i

According to International Patent Classification (IPC) or to both national classification and IPC

**B.    FIELDS SEARCHED**

Minimum documentation searched (classification system followed by classification symbols)

G06N G06F

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; EPTXT: 量子, 计算, 合肥本源量子科技, 拓扑, 编译, 任务, 芯片, 设备, quantum, calculation, topology, compilation, task, assignment, chip, equipment

**C.    DOCUMENTS CONSIDERED TO BE RELEVANT**

| Category* | Citation of document, with indication, where appropriate, of the relevant passages | Relevant to claim No. |
| --- | --- | --- |
| X | CN 109376866 A (HEFEI ORIGIN QUANTUM COMPUTING TECHNOLOGY CO., LTD.) 22 February 2019 (2019-02-22) description, paragraphs [0024]-[0090] | 1-11 |
| X | CN 110825375 A (HEFEI ORIGIN QUANTUM COMPUTING TECHNOLOGY CO., LTD.) 21 February 2020 (2020-02-21) description paragraphs [0070]-[0187] | 1-11 |
| A | CN 110069348 A (JINAN INSPUR HIGH-TECH INVESTMENT DEVELOPMENT CO., LTD.) 30 July 2019 (2019-07-30) entire document | 1-11 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 March 2022** | **30 March 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/074798**

| Patent document cited in search report | | | Publication date (day/month/year) | Patent family member(s) | | | Publication date (day/month/year) |
|---|---|---|---|---|---|---|---|
| CN | 109376866 | A | 22 February 2019 | CN | 109376866 | B | 12 March 2021 |
| CN | 110825375 | A | 21 February 2020 | None | | | |
| CN | 110069348 | A | 30 July 2019 | None | | | |

Form PCT/ISA/210 (patent family annex) (January 2015)

**REFERENCES CITED IN THE DESCRIPTION**

**Patent documents cited in the description**

- CN 202110174503
- CN 202110179682
- CN 202110169289X

- CN 202110172741
- CN 202110383305
- CN 201911117541